(19) Europäisches Patentamt / European Patent Office / Office européen des brevets

(11) **EP 4 250 187 A1**

(12) **EUROPEAN PATENT APPLICATION**

(43) Date of publication:
**27.09.2023 Bulletin 2023/39**

(51) International Patent Classification (IPC):
**G06N 10/40** (2022.01)　　　**G06N 10/20** (2022.01)

(21) Application number: **22305330.7**

(52) Cooperative Patent Classification (CPC):
**G06N 10/40; G06N 10/20**

(22) Date of filing: **21.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Pasqal**
**91300 Massy (FR)**

(72) Inventors:
• **SILVERIO, Henrique Guimarães**
**91300 Massy (FR)**
• **TSAI, Bing-Shiun**
**701 Tainan City (TW)**

(74) Representative: **Slingsby Partners LLP**
**1 Kingsway**
**London WC2B 6AN (GB)**

(54) **METHOD FOR SCHEDULING CONTROL SIGNALS FOR A NEUTRAL ATOM QUANTUM COMPUTER**

(57) There is presented a method for scheduling control signals for driving a neutral atom quantum computer using a first electromagnetic source and a second electromagnetic source. The method comprises generating a set of one or more first control signals for a first quantum gate. The first quantum gate is associated with operating on at least one of a first qubit or second qubit; the first gate operating for a first duration. The method further comprises generating a set of three or more second control signals for a second quantum gate. The second quantum gate is associated with operating on at least the first qubit and second qubit. The second quantum gate operates for a second duration. The method further comprises scheduling the control signals such that at least one electromagnetic signal associated with one of the first or second quantum gates is output before the end of the respective duration of the other of the first or second quantum gates.

Fig. 18

EP 4 250 187 A1

**Description**

<u>Field</u>

The field of the invention is in quantum computing, in particular quantum computing using neutral atoms and the signals used to drive the computer.

<u>Background</u>

Quantum computing has been discussed as being a future of computing in particular for areas such as simulating quantum systems and factoring large numbers. The main goals of quantum computing are usually described to be 'quantum advantage' and 'quantum supremacy'. Quantum advantage is where the speed of the computation is faster for the quantum computing system than the classical computing system whilst quantum supremacy is the goal of showing the quantum computing system can solve a problem that is not solvable on a classical computer in a useful time frame.

There are several core principles that differentiate a classical computing system from a quantum computing system. The main one is that whilst classical computers utilise classical binary bits '0' and '1', quantum computing systems utilise states represented by a superposition of a plurality of orthogonal (and normalised) states. These orthogonal states are often called basis states. When limited to a two-level quantum system this state is called a qubit. Such quantum superpositions have no analogue in classical bits. The general pure qubit state $| \psi >$ can be represented by Equation 1.

$$|\psi\rangle = \alpha|0\rangle + \beta|1\rangle$$

[Equ. 1]

Where $\alpha$ and $\beta$ are complex coefficients that are normalised such that $\alpha^2 + \beta^2 = 1$ and $|0 >$ and $|1 >$ are the basis vectors (basis states) of the qubit. The classical 0 and 1 of conventional computers are special examples of qubits where $\alpha = 1$ and $\beta = 0$ for the measured state '0' and where $\alpha = 0$ and $\beta = 1$ for the measured state '1'. Other qubits whose values of $\alpha$ and $\beta$ are greater than 0 and less than 1 give rise to quantum superposition whereby there is a finite chance to yield either state upon measurement.

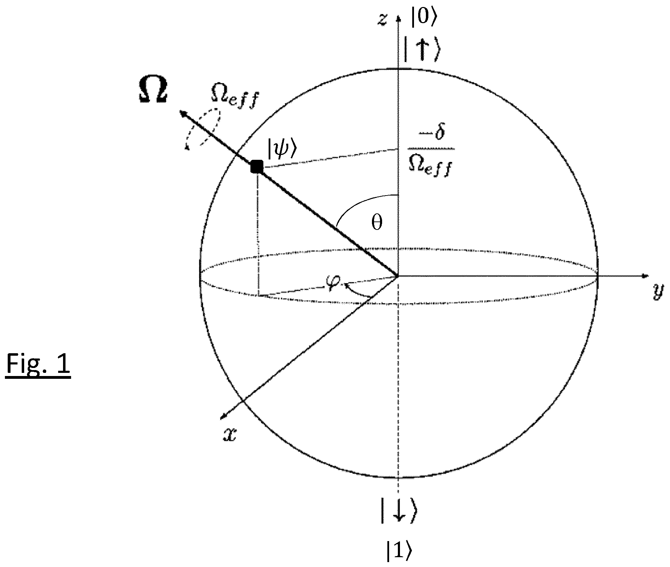

The coefficients $\alpha$ and $\beta$ of the qubit are complex numbers and are more generally represented on the Bloch sphere shown in figure 1 and by equations 2 and 3 where $e^{(i\phi)}$ represents relative phase and global phase is represented by $e^{(i\gamma)}$. The classical states |0> and |1> are shown on the Bloch sphere as being the point where the sphere intersects the Z axis, wherein these classical states are also alternatively labelled by up and down arrows to accord with an alternative qubit nomenclature. For a pure qubit state $|\psi >$, $\theta$ and $\phi$ are the angles on the Bloch sphere representation wherein $0 \leq \theta \leq \pi$ and $0 \leq \phi \leq 2\pi$. The points on the surface of the Bloch sphere are pure states of the quantum system whilst interior points are mixed states.

$$\alpha = e^{i\gamma}cos\frac{\theta}{2}$$

$$\beta = e^{i(\gamma+\phi)}sin\frac{\theta}{2}$$

[Equ. 2, 3]

A parametrised form of Equation 1 is shown in Equation 4. Because the physics of quantum systems representing single qubits only considers relative phase, the coefficient of |0> is real and non-negative so a qubit can be generally represented by equation 4.

$$|\psi\rangle = cos\frac{\theta}{2}|0\rangle + e^{i(\phi)}sin\frac{\theta}{2}|1\rangle$$

[Equ. 4]

Therefore, as described above, for example a qubit state with a 100% probability of measuring the state of 1 has θ = π, hence a coefficient β of 1 and a coefficient α of 0. Such a qubit state is equivalent to a classical computing state of 1. However, a qubit state with a 50% chance of being in either basis state 0 or 1, when measured and assuming no relative phase, may have pre-measurement qubit coefficients defined by Equation 5.

$$\alpha = \beta = \frac{1}{\sqrt{2}}$$

[Equ. 5]

(i.e. $\alpha^2 = \beta^2 = 1/2$)

In the Bloch sphere representation, a state stays in this superposition until either a measurement is made on the qubit, which collapses the qubit into the classical regime, or an operation is applied to the qubit to change its projection on the Bloch sphere. Until the qubit is measured it exists in all states permitted by the qubit superposition. Indeed, qubits that represent different states in the quantum realm may yield the same physical value when measured. However, when in a superposition state (pre-measurement) the different phases of the qubits may be utilised in the quantum circuit to effect different operations.

Several approaches for realising quantum computation are being investigated in the field, both in terms of the computing technique and the technologies required to implement them. There are a number of different hardware platforms currently being developed to implement quantum computers. Technologies being utilised include ion traps, superconducting qubits, atomic-scale solid-state defects, neutral atoms and photonics.

In classical computers, a bit is physically represented by the voltage across a semiconductor transistor. In quantum computers, qubits are implemented using two level quantum states, which are specific to the exact implementation and physical system being used. Examples of quantum states for fermions are the spin up and spin down of an electron or the hyperfine states of atomic energy levels.

In addition to several competing hardware platforms, there are also a number of different paradigms for performing the quantum computation itself. These include using quantum gates (in the 'gate model') and cluster (or graph) states (in the measurement-based computing model), as well as others. Some of the most commonly used gates include the Controlled-NOT (CNOT) gate and the Hadamard (H) gate. The CNOT operator operates in an analogous manner to the XOR gate in classical computing. The Hadamard gate applies a rotation to the superposition state on the Bloch sphere and is an important gate because it can transform a deterministic classical state to an equal superposition state.

A sequence of quantum gates, such as the Hadamard and CNOT gates that act upon qubits is termed a quantum circuit. For quantum computing to work, these gates must be reversible. The gates of a quantum circuit are forms of unitary operators 'U', often referred to as unitaries. Unitaries and indeed qubits are often represented and manipulated in matrix form. A unitary is a unitary matrix, i.e., U multiplied by its conjugate transpose U* is equal to the identity matrix.

As discussed above, one hardware solution to implementing a quantum computer is the neutral atom system. In this system a plurality of atoms are spatially separated from each other and, each held in a different position about a spatial extent, often forming a spatial array. The atoms are close enough to each other such that entanglement operations are possible. Input signals are used to control the quantum state of atoms.

In neutral atoms quantum computers, as well as in other quantum computers, the time taken to complete the computation is critical to the success of the computation. This is due to the decoherence of the quantum states over time. The control signals used to control the quantum computers are typically required to have some form of sequence, particularly when used to form quantum gates. The control signals are typically used to drive one or more lasers to output light pulses. Pulse sequences to implement a succession of quantum logic gates, in the prior art, are serial in manner; in other words, all the pulses for generating a first gate are output before the pulses are output for the second gate that follows that fist gate. Such a sequence of control signals may result in a long computation time, particularly for a long sequence of gates, hence increasing the risk of the quantum system being adversely affected by decoherence.

Summary

In a first aspect there is presented a method for scheduling control signals for driving a plurality of electromagnetic sources for controlling, using a plurality of quantum gates associated with a gate sequence, a plurality of atoms of a neutral atom quantum computer; wherein: each of the plurality of atoms is associated with a corresponding different qubit of a plurality of qubits such that at least: a first atom of the plurality of atoms corresponds to a first qubit of the neutral atom quantum computer; a second atom of the plurality of atoms corresponds to a second qubit of the neutral atom quantum computer; the plurality of electromagnetic sources comprises at least a first electromagnetic source and a set of at least one further electromagnetic sources wherein: the first electromagnetic source is operable on at least one of the first and second qubits; the set of at least one further electromagnetic sources is operable on at least the first and second qubits; the method comprising: I) generating a set of one or more first control signals for a first quantum gate wherein: at least one of the first control signals is for outputting an electromagnetic signal from the first electromagnetic source; the first quantum gate is associated with operating on at least one of the first qubit or second qubit; the first gate operating for a first duration; II) generating a set of three or more second control signals for a second quantum gate wherein: at least one of the second control signals is for outputting an electromagnetic signal from the set of at least one further electromagnetic sources; the second quantum gate is associated with operating on at least the first qubit and second qubit; the second quantum gate operating for a second duration; III) scheduling the control signals such that at least one electromagnetic signal associated with one of the first or second quantum gates is output before the end of the respective duration of the other of the first or second quantum gates. The first aspect may be adapted according to any teaching herein, including, but not limited to any of the following.

The gate sequence may be a quantum circuit. The second quantum gate may entangle at least two of the qubits associated with the gate. The second gate may be associated with operating on the first and second qubit in a way that cannot be replicated by operating with single-qubit gates on the first and second qubits separately. In other words, the second quantum gate is not separable into a set of single-qubit gates, thus the effect of the second quantum gate is not replicable with a plurality of single-qubit gates. Each control signal may be associated with driving an atomic transition, for example transitioning from one hyperfine ground state to another different hyperfine ground state; or set of transitions, for example transitioning an atom from a hyperfine ground state to a Rydberg state and back to the hyperfine ground state again. Each control signal may be associated with a time bin wherein one or more EM pulses may be input to an atom. For a quantum gate, in particular a multi-qubit quantum gate, there may be a plurality of control pulses each having a separate time bin that occurs over a different point in time to the other time bins of the control signals for the same quantum gate. These time bins may sequentially follow one another in a predetermined order. For example, a multi-qubit quantum gate may require three time bins of EM radiation in time-sequence order such that a first time bin is required for a first qubit, followed by a second time bin for a second qubit, followed by a third time bin for the first qubit. A different control signal may output for each time bin. The control signal may be output to one or a plurality of EM sources such that a time bin may have one or a plurality of EM pulses incident upon a particular atom.

The step of generating a set of three or more second control signals for a second quantum gate may comprise generating a plurality of second control signals for outputting a plurality of electromagnetic signals from the set of at least one further electromagnetic sources. Preferably, the step of generating the set of three or more second control signals for a second quantum gate may comprise generating three or more second control signals for outputting three or more electromagnetic signals from the set of at least one further electromagnetic sources. The set of at least one further electromagnetic sources may comprise a second electromagnetic source operable on at least the first and second qubits. The second electromagnetic source may output the three or more electromagnetic signals for the second quantum gate. The set of at least one further electromagnetic sources may comprise electromagnetic sources for transitioning an atom from the ground state to a Rydberg state. Any control signal may be used to drive a plurality of EM sources to transition an atom from one state to another state, for example a control signal for transitioning an atom from a first state (e.g., a ground state) to a second state (e.g., a Rydberg state) may be provided to two electromagnetic sources such that an EM pulse is emitted from each said source wherein the atom uses EM energy from both pulses to make the transition. The set of at least one further electromagnetic sources may comprise a plurality of electromagnetic sources comprising at least the second electromagnetic source and a third electromagnetic source. The second and third electromagnetic source may be configured to output the electromagnetic signals for the second quantum gate wherein at least one of the electromagnetic signals is output by the second EM source and at least one of the electromagnetic signals is output by the third EM source. A third EM source may be used to output three or more EM signals for a third quantum gate operating on two or more of the qubits.

The method may be configured such that: the second quantum gate is a Controlled-Z, CZ, or a Multiple-Controlled-Z, MCZ, gate, acting on a first set of N qubits of the plurality of qubits wherein N numbers two or more qubits; the method comprising: selecting, from analysing the gate sequence, one or more single-qubit quantum gates collectively operating on a second set of M qubits associated with the second quantum gate; the said one or more single qubit quantum gates being immediately before and/or after the second quantum gate in the gate sequence; the set of M qubits comprising qubits from the first set and numbering, at most, N-1; scheduling the control signals to execute the selected single-qubit quantum gates at least partially during the duration of the second quantum gate.

The method may therefore select one of the involved qubits and have its gates executed before and/or after the control signals are executed for the CZ gate, whilst the rest of the single qubit gates of the involved qubits may be executed simultaneously with the CZ gate.

The method may further comprise: identifying the atom associated with a qubit of the N qubits that is not selected; selecting the above identified atom to receive the starting control signal for the second quantum gate.

The method may further comprise: identifying the atom associated with a qubit of the N qubits that is not selected in claim 2; selecting the above identified atom to receive the final control signal for the second quantum gate.

The method may further comprise: A) identifying a single-qubit quantum gate that: i) operates on a qubit of the N qubits that is not one of the M qubits; the said qubit of the identified single-qubit quantum gate being the identified qubit; ii) resides between the second quantum gate and a third quantum gate wherein the third quantum gate: a) occurs later in the gate sequence than the second quantum gate; b) operates on two or more of the plurality of qubits of the neutral atom quantum computer wherein one of the said two or more qubits is the identified qubit; iii) resides adjacent to the second quantum gate and third quantum gate in the gate sequence; B) scheduling the control signals to execute the identified single qubit quantum gate in step A) at least partially during the duration of the third quantum gate. This step prioritises the absorbing of single qubit quantum gates that were candidates for selecting on a previous quantum gate but were previously not selected for absorption.

The method may be configured such that: I) the plurality of quantum gates comprises: i) a plurality of multi-qubit quantum gates; and, ii) a plurality of single-qubit quantum gates; II) the step of scheduling the control signals comprises: A) grouping the quantum gates by: iii) creating a first gate-group comprising at least: a) a first of the multi-qubit quantum gates; and, b) a first of the single-qubit quantum gates, iv) creating a second gate-group comprising at least: c) a second of the multi-qubit quantum gates; and, d) a second of the single-qubit quantum gates, B) determining an order of gate execution by prioritising the first gate group over the second gate group.

The method may be configured such that the set of at least one further electromagnetic sources comprises: I) a second electromagnetic source; and, II) a third electromagnetic source; each of the second and third electromagnetic sources for outputting the second control signals for driving the second quantum gate.

Each of the second control signals may be sent to one of the second electromagnetic source or the third electromagnetic source. Each of the second EM source and third EM source may be respectively associated with a single atomic transition. For some transitions, an atom may require EM radiation from different EM sources, for example at different wavelengths. For such transitions the second EM source may comprise a plurality of EM sources and the third EM source may comprise a plurality of EM sources.

The method may be configured such that: I) the first quantum gate is the first single qubit quantum gate; II) the second quantum gate is the first multi-qubit quantum gate; III) creating the first gate group comprises: selecting one or more single-qubit quantum gates, associated with the qubits operated on by the first multi-qubit quantum gate, that occur before the first multi-qubit quantum gate in the gate sequence; not selecting single-qubit quantum gates, associated with the qubits operated on by the first multi-qubit quantum gate, that occur after the first multi-qubit quantum gate in the gate sequence; IV) creating the second gate group comprises: selecting one or more single-qubit quantum gates, associated with the qubits operated on by the second multi-qubit quantum gate, that occur before the second multi-qubit quantum gate in the gate sequence; not selecting single-qubit quantum gates, associated with the qubits operated on by the second multi-qubit quantum gate, that occur after the second multi-qubit quantum gate in the gate sequence.

The selection of the single qubit gates may comprise selecting single qubit gates adjacent to the corresponding multi-qubit gate. The creating of any of or more the groups may comprise selecting all available single qubit gates occurring before the multi-qubit gate in the gate sequence.

The method may be configured such that: the one or more control signals associated with the single-qubit quantum gates of the second gate group are executed: A) before or at least partially during the execution of the last control signal associated with the first multi-qubit quantum gate; B) after or at least partially during the execution of the first control signal associated with the second multi-qubit quantum gate.

The method may be configured such that: I) the control signals associated with the first multi-qubit quantum gate comprise a middle control signal in the control signal order for the first multi-qubit quantum gate; II) the control signals associated with the second multi-qubit quantum gate comprise a middle control signal in the respective control signal order for the second multi-qubit quantum gate; III) the control signals associated with the single qubit quantum gates of the second gate group are executed: i) after the middle control signal for the first multi-qubit quantum gate; ii) before the middle control signal for the second multi-qubit quantum gate.

The method may further comprise: generating a dependency graph associated with the gate sequence, the dependency graph comprising a plurality of nodes and associated with a node execution list; grouping the second quantum gate at least with the selected one or more single qubit quantum gates in claim 2 to form a first node of the nodes of the dependency graph; scheduling the control signals based on the node execution list.

The method may be configured such that: A) the gate sequence comprises a third quantum gate operable on a plurality of the qubits of the neutral atom quantum computer; B) a single-qubit quantum gate in the gate sequence: operates on one of the qubits of the first set of N qubits that is not one of the second set of M qubits; resides adjacently between, and is operated on by, the second and third quantum gates; the method comprising: grouping the third quantum gate at least with the single qubit quantum gate in step B) to form a second node of the nodes of the dependency graph.

The method may be configured such that grouping the second quantum gate to form the first node comprises: A) determining which qubits from the first set of N qubits are associated with: a) a single qubit quantum gate occurring immediately before the second quantum gate in the gate sequence; and, b) a single qubit quantum gate occurring immediately after the second quantum gate in the gate sequence; B) selecting the second set of M qubits based on the above determination.

The method may further comprise generating the node execution list by: prioritising a third node for execution if: the third node corresponds to a single-qubit quantum gate corresponding to one of the first set of N qubits; and, the execution of the third node allows the first node to be entered on the node execution list.

The method may be configured such that at least two nodes of the dependency graph each comprises a multi-qubit quantum gate; the method further comprises generating the node execution list by: prioritising entry onto the execution list of one of the said at least two nodes over another of the said at least two nodes, if: a) the execution of that one node allows a further node associated with a single qubit quantum gate to be entered on the node execution list; b) the execution of the said another node does not allow a further node associated with a single qubit quantum gate to be entered on the node execution list.

The method may be configured such that the first quantum gate precedes the second quantum gate in the gate sequence.

The method may further comprise scheduling the control signals such that the electromagnetic signal associated with the starting qubit operation of the second quantum gate is output before the end of the first gate duration.

The method may further comprise: analysing the gate sequence to determine any time periods when the starting qubit for the second gate is being operated on by the first gate; and, scheduling the control signal for operating on the starting qubit based on the determination.

For example, if the starting qubit operation of the second gate is on the first qubit, and, if the first qubit needs to be operated on by the first gate before the same qubit is operated on by the second gate, then the method starts second gate operations on the first qubit after the first qubit has been finished being operated on by the first gate.

The method may be configured such that: the plurality of atoms comprises a third atom corresponding to a third qubit of the neutral atom quantum computer; the plurality of gates comprises a third quantum gate operable in parallel with at least one of the first or second gates, in the gate sequence; the third quantum gate operating on the third qubit for a third gate duration; the method comprising: scheduling the control signals such that said electromagnetic signal associated with the second quantum gate is output before the end of the third gate duration. The method may therefore further identify which operations on qubits may be performed in parallel with other gates and schedule control pulses to be output when at least some of the other gates are operating on other qubits.

The method may be configured such that the third gate operates on the third qubit using the first electromagnetic source.

The method may further comprise: identifying two or more adjacent single qubit gates operating on the same qubit in the gate sequence; and, combining the identified single qubit gates to form a new single qubit gate.

The method may further comprise outputting the control signals to the plurality of electromagnetic sources. The method may further comprise outputting electromagnetic signals associated with the control signals.

There is also presented a non-transitory computer readable medium comprising instructions for executing any one or more of the methods described in the first aspect. The method of the first aspect may be a computer implemented method. In this respect computer implemented is intended to mean implemented by a classical computer.

There is also presented a system comprising an electronic computer comprising:

I) a processor;

II) memory comprising instructions for executing the method as described in the first aspect.

The system may further comprise the neutral atom quantum computer. The system may comprise a chamber comprising the plurality of atoms. The system may comprise the plurality of electromagnetic sources.

The system may further comprise one or more further electromagnetic sources for:

I) trapping the atoms; and/or

II) moving trapped atoms.

The system may comprise one or more detectors for monitoring EM radiation output by the plurality of atoms. The one or more detectors may comprise a camera. The camera may be configured to detect fluorescent light emitted by the atoms.

The system may be configured to hold atoms in an array of atom traps. The array may be ID, 2D or 3D and may be periodic.

There is also presented a method of executing a quantum algorithm on a neutral atom quantum computer, the algorithm comprising the gate sequence. The method of executing a quantum algorithm comprises the method of the first aspect. The method of executing a quantum algorithm may further comprise trapping a plurality of the atoms. The method of executing a quantum algorithm may further comprise moving trapped atoms into a register. The method of executing a quantum algorithm may further comprise determining a result of the algorithm by analysing data output from a detector monitoring EM radiation output by the atoms.

Brief description of the figures

Embodiments of the present invention will now be described in detail with reference to the accompanying drawings, in which:

Figure 1 shows the Bloch sphere;

Figure 2a shows a schematic depicting a set-up for a neutral atom quantum computer;

Figure 2b shows an example of a set-up for a neutral atom quantum computer;

Figures 3a-3c show examples of atomic system energy level transitions;

Figures 4a and 4b show an example of the Rydberg blockade;

Figure 5 shows a schematic example of a CNOT gate;

Figures 6a-6d show examples of energy level transitions of a CZ gate;

Figure 7 shows an example of a quantum circuit;

Figure 8 shows a schematic representation of a first example of control pulses for driving the quantum circuit of figure 7;

Figure 9 shows a schematic representation of a second example of control pulses for driving the quantum circuit of figure 7;

Figure 10 shows an example of a further quantum circuit;

Figure 11 shows the example of a further quantum circuit of figure 10 with gate groupings;

Figure 12 shows a dependency graph for figure 11;

Figure 13 shows a gate execution list for figure 12;

Figure 14 shows a schematic representation of a first example of control pulses for driving the quantum circuit of figure 10;

Figure 15 shows a flow diagram of an example method for scheduling control signals for a neutral atom quantum computer;

Figure 16a shows an example of pulse scheduling with two Rydberg channels;

Figure 16b shows a further example of pulse scheduling with two Rydberg channels;

Figure 17 shows an example of pulse scheduling with two Rydberg channels and a Raman channel;

Figure 18 shows a further example of grouping quantum gates;

Figure 19 shows an example of determining a Raman channel to utilise;

Figure 20a shows an example of a quantum circuit with two multi-qubit gates;

Figure 20b shows a spatial depiction of possible qubit interference between the qubits of figure 20a;

Figures 21a and 21b show different examples of determining which Rydberg channels to use for a multi-qubit quantum gate.

Detailed description

There is presented a method for outputting signals for controlling a neutral atom quantum computer. In the following description, reference is made to 'quantum computing' and 'quantum computer/s'. This form of computing is taken to be different to standard electronic computing or computers, which may be referred to as 'classical' computers. Examples of classical computing hardware and software that can be used with the method are provided elsewhere herein.

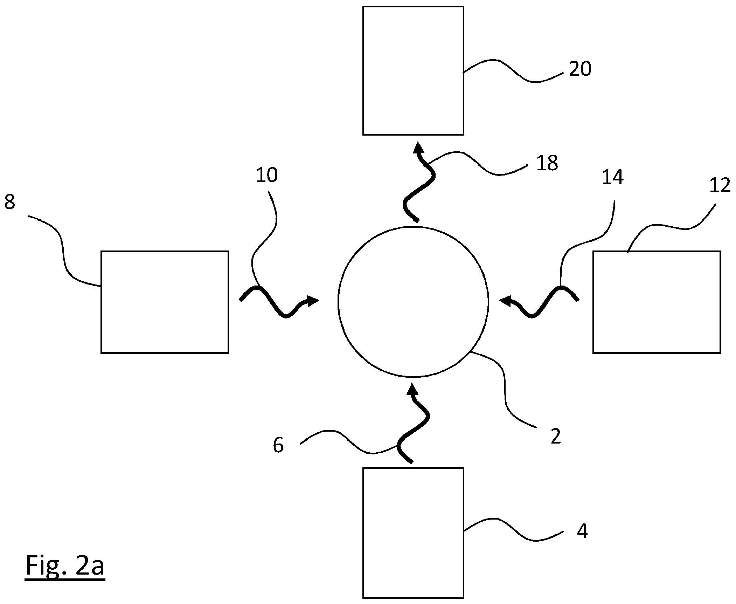

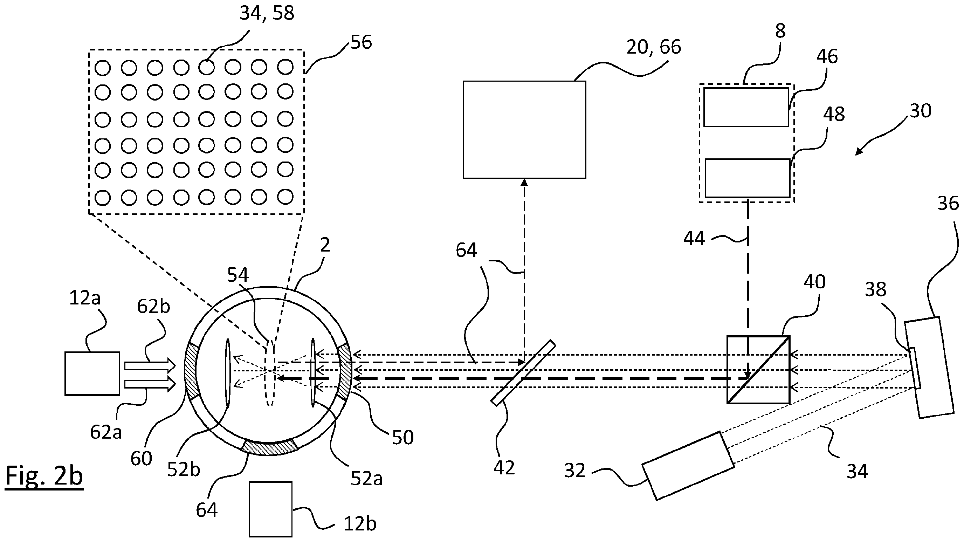

The method may be enacted by an apparatus, a system of components, a device or a plurality of devices. Figure 2a shows a general schematic of a set-up for neutral atom quantum computer. The set-up may be referred to as a 'quantum computing system'. Figure 2b shows a further, more detailed, example of such a set-up.

General example of a neutral atom quantum computer system set-up

As a schematic, the positions and configurations of the elements in figure 2a are not supposed to imply any real-world size, positioning or configuration of features, but merely to illustrate an example of the key functioning components of a neutral atom quantum computing system that can be used with the methods discussed herein.

In figure 2a, a chamber 2 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 2, for trapping, positioning and atomic-state-manipulating may be any suitable atom, for example, but not limited to, any of Rubidium, Caesium, Strontium and Ytterbium. Other examples of particular elements or element groups are discussed elsewhere herein. Preferably the atoms used are those having one or two valence electrons such as alkali metals and alkali earth metals however others may also be used such as rare earth elements.

A group of the atoms are held by a holding apparatus 4. The holding apparatus 4 acts to isolate each individual atom such that each atom, in the group, is held in a different point in space (to the other atoms of the group) within the chamber 2. The term 'isolate' in this context means that the atoms are physically held away from each other, in space, and do not nominally interact (when in a non-excited atomic state) with adjacently held atoms of the same group. If the atoms are acted upon by an input stimulus such as, for example, an electromagnetic signal of one or more photons, held atoms may interact with other held atoms using particular physical effects such as, but not limited to the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 4 may act to maintain the atoms in their respective stationary positions using different mechanisms including, but not limited to, magnetics traps and optical traps. The holding apparatus 4 may provide a plurality of trap sites wherein, when first activated to output the traps, some trap sites are filled by one or more atoms whilst other trap sites are vacant. Preferably the holding apparatus 4 is configured to present trap sites that hold only one atom. In figure 2a we assume that the holding apparatus 4 uses one or more electromagnetic signal, such as optical signals 6, that are input into the chamber 2 to affect the optical traps. The electromagnetic signals may be any suitable wavelength, including but not limited to 800-1500nm, more preferably 820 - 880nm. Figure 2a shows the holding apparatus 4 being external to the chamber 2, however, the holding apparatus 4 may form part of the chamber 2 or be inside the chamber 2. Although only a single holding apparatus 4 is shown in figure 2a, it is envisaged that more than one holding apparatus 4 may be used.

An atom positioner 8 is also shown in figure 2a. The atom positioner 8 is an apparatus that is able to controllably move one or more held atoms from one spatial position to another spatial position. For example, the atom positioner 8 may move an atom trapped in one of the optical trap sites to another different trap site. Figure 2a shows the atom positioner 8 being external to the chamber 2, however, the atom positioner 8 may form part of the chamber 2 or be inside the chamber 2. Furthermore, the atom positioner 8 and holding apparatus 4 may be part of the same device or system for holding and moving the atoms. The atom positioner 8 may use different technologies to manipulate the position of the atoms including, but not limited to, moving the atoms using magnetic signals or electromagnetic signals such as optical signals. The electromagnetic signals may be any suitable wavelength, including but not limited to 800-1500nm, more preferably 820 - 880nm. In figure 2a we assume that optical signals 10 are used such as, but not limited to optical tweezers. Although only a single atom positioner 8 is shown in figure 2a, it is envisaged that more than one atom positioners 8 may be used.

An atomic state actuator 12 is also shown in figure 2a. This atomic state actuator 12 outputs one or more signals to control and manipulate the atomic states of one or more of the atoms in the chamber 2, preferably the trapped atoms, i.e., it actuates the transition between atomic states. The signals output by the atomic state actuator 12 are electromagnetic signals 14 of one or more photons. Different signals may be output by the atomic state actuator 12 including signals at different wavelengths. Each wavelength may correspond to (i.e., be resonant with) a different atomic transition. Although only a single atomic state actuator 12 is shown in figure 2a, it is envisaged that more than one atomic state actuator 12 may be used. For example, a first atomic state actuator 12 may output a different wavelength or set of wavelengths than a second atomic state actuator 12. The atomic state actuator may facilitate the transition between atomic states of a single trapped atom or a plurality of trapped atoms. For example, two or more, three or more, trapped atoms, or all of the trapped atoms. Figure 2a shows the atomic state actuator 12 being external to the chamber 2, however, the atomic state actuator 12 may form part of the chamber 2 or be inside the chamber 2. The electromagnetic wavelength for transitioning a rubidium atom to the Rydberg state may be 297nm. The electromagnetic wavelength for transitioning a Caesium atom to the Rydberg state may be 318.6nm. The electromagnetic frequency for transitioning a rubidium atom between hyperfine states may be 6.835 GHz. The electromagnetic frequency for transitioning a Caesium atom between hyperfine states may be 9.192 GHz. The excitation from the ground state to the Rydberg state may be facilitated by two-photon absorption. This may be accomplished using two different EM sources such as lasers or other EM sources. These two EM sources may have different wavelengths.

Preferably any electromagnetic signals used to trap and move the atoms are preferably different, at least in wavelength, to the optical signals used to manipulate the quantum states of the atoms. In particular, any electromagnetic signals for trapping and moving the atoms are preferably off-resonance, i.e., the wavelength of the holding and positioning electromagnetic signals do not act to excite the atom between different atomic states.

A detector 20 is also shown in figure 2a. This detector 20 is used to monitor electromagnetic signals 18 output from the atoms in the chamber 2. This detector may comprise a camera. The camera may be used to image the fluorescence output by the atoms held by the holding apparatus 4. Figure 2a shows the detector 20 being external to the chamber 2, however, the detector 20 may form part of the chamber 2 or be inside the chamber 2.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 4 emits signals into the chamber 2 to create a plurality of optical traps.
B) Some of the ensemble of atoms in the chamber 2 are automatically trapped by the plurality of traps.
C) The atom positioner 8 is then optionally used to move some, or all, of the trapped atoms between traps so that at least a particular set of the traps are each filled by an atom. This set of traps may be referred to as a 'register'. The detector 20 may be used in this process to help identify which traps are occupied or vacant. In some examples the atom positioner may not be required.
D) The atomic state actuator 12 outputs one or more electromagnetic signals 14 to control atomic state transitions of at least one of the atoms. This step may be performed a plurality of times to implement processing operations of the quantum computer, for example, time-sequentially inputting a plurality of electromagnetic signals to implement quantum logic gate operations.
E) The detector 20 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 2a, including but not limited to: the atoms used; the atomic state actuator 12; the atom positioner 8; the holding apparatus 4; the detector 20; the general operation; may be used with any other example presented herein.

Detailed example of a neutral atom quantum computer system set-up

Figure 2b shows a specific example of a neutral atom quantum computing/system setup 30 wherein the chamber 2 is a vacuum chamber and a dilute atomic vapour is formed inside the chamber 2. The chamber 2 is an ultra-high vacuum system operating at room temperature, however other environmental temperatures may be formed inside the chamber 2. Figure 2b is a more detailed example of figure 2a wherein like references in the figures represent like components. This set-up may be adapted according to any teaching herein including, but not limited to, the features described above for figure 2a. The set-up in figure 2b may also be referred to as a 'quantum processor' or 'quantum system'. It is to be understood that the example in figure 2b is just one example of a set-up for a quantum processor and provides a 2D array of optical trapping sites, however other set-ups may be used, for example to implement a 3D array of trapping sites by including a plurality of the below-mentioned components and different component locations and/or configurations. The example in figure 2b may also be adapted by removing components, adding components, combining components and re-positioning components.

In figure 2b a laser system 32, comprising a laser and beam-expanding optics, outputs a cross-sectionally-wide collimated laser beam 34 towards a spatial light modulator (SLM) 36. The SLM 36 and the laser system 32 being equivalent to the holding apparatus 4 in figure 2a. The SLM 36 comprises a 2D periodic array of controllable deformable mirrors 38 which receive the collimated beam 34 and selectively reflect portions of the beam 34 towards a polarising beam splitter (PBS) 40. The SLM 36 outputs an adjustable phase pattern on the light 34, that in turn gets converted into an intensity pattern 58 by first lens 52a, as described later. The polarisation of the reflected portions of the beam 34 pass through the PBS 40 and propagate towards a dichroic mirror 42. It is understood that the laser system may have other components such as a polarisation rotator (not shown) for controllably adjusting the polarisation of output light 34 incident upon the SLM 36, so that the polarisation of light 34 is aligned to the transmission axis of the PBS 40.

The PBS 40 also receives electromagnetic signals 44 from an atom positioner 8 comprising a laser 46 and a 2D acousto-optic laser beam deflector 48 that receives laser light from the laser 46 and controls the direction of the laser light into the PBS 40. In turn, this allows the deflector 48 to use the laser light 44 as an optical tweezer or an array of optical tweezers. The light 44 output from the atom positioner 8 is reflected by the PBS 40 such that it is output from the PBS 40 along a substantially similar path to the light 34 output from the PBS 40 that originates from the laser system 32. The light beams 34 and 44 may at least partially overlap in space when output from the PBS 40. The light 44 originating from positioner 8 that is reflected and output by the PBS 40 is incident upon the dichroic mirror 42.

It is noted that the position and direction of light rays in figure 2b, such as beams 34 and 40, are shown spatially separate to each other, however this is merely for purposes of visual clarity in the figure and may not represent the beam positions in practice.

Both the light 44 and 34 output from the PBS pass through the dichroic mirror 42 and are incident upon window 50 of the chamber 2. The window 50 may be one of a plurality of windows in the chamber that are at least partially transparent to the wavelengths of the light that are incident upon them that are generated by the electromagnetic sources of the system 30. The window 50 forms part of the body of the chamber 2 and is sealed with respect to the walls of the chamber such that the chamber 2 holds a vacuum environment within it. Other components may be associated with the vacuum chamber 2 by either being inside the chamber 2, integrated with the chamber 2 or immediately surrounding the chamber 2 insofar that the components may input stimuli into the chamber 2, such as electromagnetic fields or magnetic fields. One or more magnetic coils (not shown) may be included about the chamber 2 to provide a spatially-varying magnetic field that, with the laser light 34, acts to provide a magneto-optical trap (MOT). The laser light 34 may have a wavelength configured to cool the atoms via the mechanism of doppler cooling. The light 34 may be split and/or reflected by other optical components (not shown) to provide a plurality of beams propagating along different directions that intersect the trapping area 54. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 34, the magneto-optical trap. The quantum system 30 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 2 are a pair of convex lenses 52a, 52b. The first lens 52a is positioned to receive light beams 34 and 44 passing through the window 50 and focus them both onto a trapping area 54 of minimum beam waist (i.e., at the focal plane of the lens 52a). The second lens 52b is located on the opposite side of the focal plane and captures light exiting the trapping area 54 and focusses or collimates the light into a plurality of light beams that may be incident upon: a beam dump inside the chamber 2 (not shown) or another chamber window 60 that allows the light to escape the chamber 2.

An expanded view 56 of the focal plane in area 54 is also shown in figure 2b wherein an array of optical trapping sites 58 are shown that are created from the mirrors 38 of the SLM 36 reflecting portions of the light 34.

Figure 2b further shows two atomic state actuators 12a/b that take the form of lasers that output light for manipulating the states of the atoms trapped at the trapping sites 58. In figure 2b, actuator 12a is a system comprising two lasers, each laser outputting light 62a/b at two different wavelengths, wherein the different wavelengths match different atomic transitions of the atomic system (or 'ensemble') held in the chamber 2. The light from the actuator 12a is incident upon a chamber window 60, through which the light travels and is incident upon the second lens 52b. The lens 52b, in turn focusses the light onto the atoms in the trapping sites 58. A further atomic state actuator 12b is shown positioned, about the plan view of the chamber 2, orthogonally to the first actuator 12a. This second actuator 12b may be substantially similar to the first actuator where a further chamber window 64 allows light output from the second actuator into the chamber 2. The second actuator 12b may be used to help address and manipulate atoms, particularly when the system provides a 3D array of optical traps. The optics for focussing light inside the chamber 2 from the second actuator is not shown in figure 2b.

It is to be understood that figure 2b and its accompanying description is an example of a setup for a neutral atom quantum computer. The atomic state actuators 12 may be positioned in different locations, including inside or outside the chamber 2 or part of the chamber 2. There may also be one or a plurality of different actuators 12. The actuators 12 may be integrated or otherwise co-located with other electromagnetic sources such as the laser 46 or laser system 32. It is also to be understood that the quantum system 30 may include other optical or electronic components and/or configurations to allow the neutral atoms to be addressed by the different electromagnetic sources.

Light, for example fluorescence, emitted by the trapped atoms may be output from the chamber 2 through any of the windows 50, 64, 60. In figure 2b, the light 64 emitted from the trapped atoms travelling out of the window 50 is, prior to exiting window 50, collimated by the first lens 52a. This light 64, once exited window 50, is incident upon the dichroic mirror 42. The mirror 42 reflects the emitted light 64 towards a camera 66 (which is equivalent to the detector in figure 2a). The camera may be an electron-multiplying charge-coupled-device (EMCCD) camera. The dichroic mirror may have an edge or pass-band characteristic filter response that substantially reflects emitted light 64 but substantially transmits light 34 and 40.

Figure 2b is shown as a collection, or system, of separate components, including bulk-optic devices wherein light is propagated between components using free-space propagation. It should be appreciated that other versions of the quantum system set-up 30 may be implemented using fibre-optics or integrated optic components.

The components of the quantum system 30, such as, but not limited to, laser system 32, atom positioner 8, camera 66, actuators 12a/b may be controlled by a classical computer system running one or more pieces of software and/or providing manual use input through an interface to control these components. Details of classical computer system features are provided elsewhere herein.

Example of operating the quantum processor

There now follows an example of operating a quantum processor such as, but not limited to the set-up as shown in figure 2b. The atoms in this example are rubidium atoms, however other atoms may be used.

The atoms in the chamber 2 are initially not in an arrangement suitable for performing quantum computing operations. To get the atoms in an arrangement for quantum processing, a 3D MOT is initiated, as described above, wherein a cold ensemble of $10^6$ atoms with a $1\text{mm}^3$ volume is prepared inside the trapping area 54. This array of atoms may be referred to as a 'register' and steps of locating atoms in the trapping sites may be referred to as 'register loading'. The optical tweezers using light 44 isolate individual atoms in the ensemble. The trapping volume of a tweezer may be between $1\text{-}10\mu\text{m}^3$ or generally in the order of a few $\mu\text{m}^3$. Such a volume may trap at most one atom at a time. The number and arrangement of tweezers may be in any ID, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub register atom arrangements are also possible.

To determine where the atoms are initially held in the register, the atoms are imaged by collecting their fluorescence on the camera 66. From these one or more images a program run on a classical computer system may be used to determine the position of the initially occupied sites 58. Additionally, or alternatively a user may provide input to determine such positions. When a classical computer is used, an algorithm is used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 48.

Optionally a further image may be acquired in a similar way as described above to check whether the sub-register formed has atoms in the predetermined positions. Furthermore, when any quantum processing is complete, the sub-register may be read out in a similar way using the camera 66. The above process of setting up a sub register is optional; the use of the atoms in the register may be performed, in principle, without the need for setting up a sub register.

Quantum processing using the register

The sub-register of atoms described above that is operated on to perform quantum computing operations may be referred to in the following discussions as simply the 'register'. Furthermore, it is to be understood that any quantum operations made on the register, according to a desired quantum algorithm, may be repeated one or more times to reconstruct the relevant statistical properties of the final quantum state produced. This is typically done because of the probabilistic nature of each possible outcome imposed by quantum mechanics.

As described above, the quantum states of the atoms may be controlled by atomic state actuators such as actuators 12a/b exemplified in figure 2b. It is assumed in the following discussions that the actuators 12a/b are lasers, however other actuators may be used. The quantum system 30 may be used for analog computing where lasers 12a/b are applied to the atoms to realise a Hamiltonian. The quantum system 30 may also be used for digital computing where a quantum algorithm is decomposed into a plurality of quantum logic gates, typically wherein two or more of the gates are in succession. The quantum gates are realised by inputting laser light from the lasers 12a/b into selected individual atoms in the register. The following discussion assumes that a digital implementation is used.

The two qubit states used are the hyperfine ground states of the rubidium atom. Hyperfine states of other atoms may be used in the alternative. These ground states have long or infinite lifetimes that prevent radiative coupling to the electromagnetic environment. This is advantageous because digital quantum computing requires qubits that are robust against decoherence. The spacing between atoms in the register may be several micrometres. The lasers 12a/b are typically focussed using lenses such as second lens 52b, and other lenses not shown in figure 2b. The laser used for transitioning the atoms between these two hyperfine ground states may be a Raman laser. This laser and its output light may be referred to herein as the 'Raman channel'. There may be a plurality of Raman channels used.

Quantum logic gates may be implemented by operating on a single qubit or operating on multiple qubits, such as two or more qubits. A single qubit gate may be implemented by having a laser 12a/b act upon the atom wherein any single qubit gate may be implemented by tuning the properties of the incoming laser signal. This laser signal may also be referred to as a 'control field'. By changing the properties of the control field, any arbitrary rotation of the qubit state, on the Bloch sphere, may be performed. The atom-laser field interaction is affected by the Rabi frequency (its strength, proportional to the amplitude of the laser field); the detuning $\delta$ (the difference between the qubit resonance and the field frequencies) and their relative phase. Driving the control field for a duration $\tau$ induces rotations around the (x, y, z) axes. Hence, any single-qubit gate can be implemented by tuning the pulse duration, the laser intensity, and detuning and the phase of the laser.

In more detail, the transitions between atomic states, hence quantum states, of the atomic system, may be driven through the emission of pulses by one or more electromagnetic sources. We may define a pulse as the modulation of a channel's output amplitude, detuning, and phase over a finite duration $\tau$. For a channel targeting the transition between notional energy levels a and b, with resonance frequency $\omega_{ab}$ = |Ea - Eb|/h, the output amplitude determines the Rabi frequency $\Omega(t)$, and the detuning $\delta(t)$ is defined relatively to $\omega_{ab}$ and the frequency of the channel's output signal $\omega(t)$, as $\delta(t) = \omega(t) - \omega_{ab}$. Additionally, the phase $\varphi$ of a pulse can be set to an arbitrary, constant value. A pulse-driven transition between two energy levels can be mapped to a spin-1/2 system through the drive Hamiltonian:

$$H^D(t) = \frac{\hbar}{2}\Omega(t) \cdot \sigma,$$

[Equ. 6]

where $\sigma = (\sigma^X, \sigma^Y, \sigma^Z)^T$ is the Pauli vector and $\Omega(t) = (\Omega(t)\cos(\varphi), -\Omega(t)\sin(\varphi), -\delta(t))^T$ the rotation vector.

In the Bloch sphere representation, for each instant $t$, this Hamiltonian describes a rotation around the axis $\Omega$ with angular velocity:

$$\Omega_{EFF} = |\Omega| = \sqrt{\Omega^2 + \delta^2}$$

[Equ. 7]

as illustrated in Figure 1.

The above parameters for driving the control field maybe are controlled using direct digital synthesizers (DDS) or RF sources that drive acousto- and electro-optic modulators (AOM and EOM) placed on the laser beams or other electromagnetic sources. As an illustration, when driving the control field at resonance ($\delta$ = 0), the qubit oscillates in time between the states |0> and |1>.

One-qubit gates are specific unitary transformations described by 2-by-2 complex matrices transforming one qubit state into another. Notable examples are the NOT-gate that changes the state |0 > into |1> and vice-versa. The NOT gate is shown below in equation 8.

$$\mathrm{NOT} = \begin{bmatrix} 0 & 1 \\ 1 & 0 \end{bmatrix}$$

[Equ. 8]

The Hadamard (H) gate is another single-qubit gate that generates superposition of both states starting from a pure state. In the {|0>, |1>} basis, the Hadamard gate is shown below in equation 9.

$$\mathrm{H} = \frac{1}{\sqrt{2}} \begin{bmatrix} 1 & 1 \\ 1 & -1 \end{bmatrix}$$

[Equ. 9]

The NOT gate may be implemented by a $\pi$ rotation about the x axis in the Bloch sphere whilst the Hadamard gate may be implemented by a $\pi$ rotation about the (x+z) axis.

Two-qubit gates are unitary transformations described by 4-by-4 matrices that transform one two-qubit state into another, allowing the generation of entanglement in the register. From a physics viewpoint, their implementation requires an interaction between the qubits. However, neutral atoms in their electronic ground state can only interact significantly via contact physical collisions. Single atoms are typically separated by a few micrometres in the register and therefore do not naturally 'feel' each other, therefore they do not normally interact. Two or more qubit gates described herein may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 12a/b used to impart light at the wavelength needed for the Rydberg transition may be referred to as the Rydberg laser. The Rydberg laser and its output light may be referred to herein as the 'Rydberg channel'.

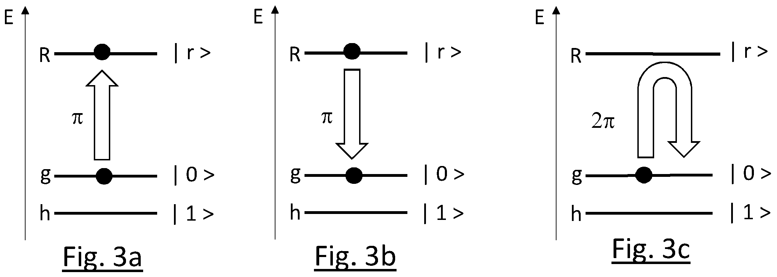

Figures 3a-3c schematically show three levels of the atomic system of the rubidium atoms used herein wherein: the energy levels 'g' and 'h' denote the hyperfine states that represent the |0 > and |1 > qubit states respectively, whilst 'R' represents the Rydberg state of the atomic system and is associated with quantum state |r >. The label of '$\pi$' in figures 3a and 3b is shown when a single transition is made between the g and R state indicating that a $\pi$ change in $\theta$ (see equation 4) has been imparted into the atomic system because of the overall transition. Similarly, when a laser field of sufficient duration and amplitude has been imparted onto the atom to transition it from the g energy level up to the R energy level and then back to the g energy level (within the same control field input), this is labelled as '2$\pi$' indicating that a 2$\pi$ change in $\theta$ (i.e., a full Bloch sphere rotation) has been imparted into the atomic system because of the overall transition. The laser fields that give rise to these $\pi$ and 2$\pi$ transitions may be respectively referred to as a $\pi$-pulse and a 2$\pi$-pulse wherein the corresponding change in $\theta$ may also be referred to, herein, as a 'phase change' or 'phase factor'. It is understood that the input control fields causing these transitions have a wavelength resonant with the |0 > to | r > transition and not resonant between the |0 > and |1 > transition. Figure 3a shows the atomic transition from the g level to the R level with a $\pi$-pulse. Figure 3b shows the atomic transition from the R level to the g level with a $\pi$-pulse. Figure 3c shows the atomic transition from the g level to the R level and back to the g level again with a 2$\pi$-pulse.

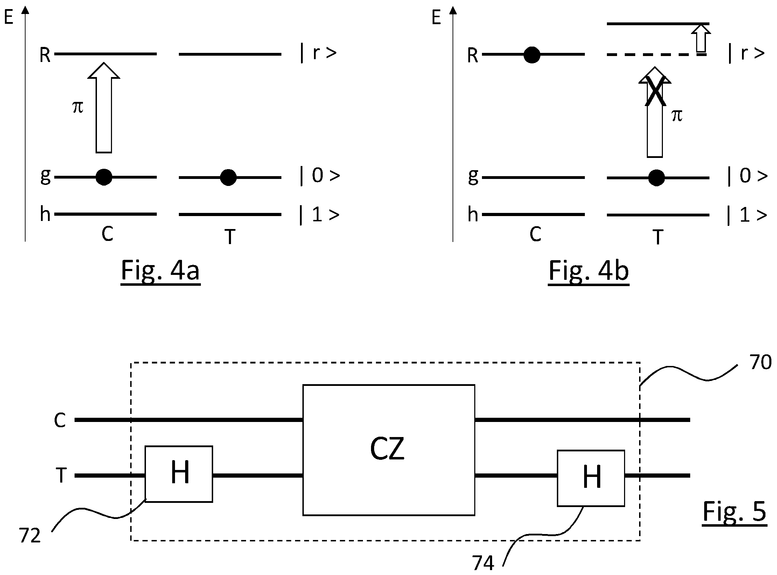

The Rydberg blockade may be used in the situation where two neighbouring atoms are both in the |0 > state, i.e., both at the g energy level as shown in figure 4a. In figure 4a, the above energy levels are shown for two identical rubidium atoms wherein the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a $\pi$-pulse as shown in figure 4a. At a time after the C atom has transitioned to the R state, the equivalent R state energy level for the T atom is raised above its normal energy level due to the effect of the C atom being in a higher energy state. If a $\pi$-pulse is then introduced to the T atom whilst this 'blockade' is in effect, as shown in figure 4b, the $\pi$-pulse will not transition the T atom from the g energy level to the R energy level due to the laser wavelength now being detuned from the energy difference between the new Rydberg-energy level and the g-energy level. As such, the T atom remain in the g state. The Rydberg blockade may therefore be used to enable the state of one qubit (C atom) to affect the state of another qubit (T atom). The cross over the arrow in figure 4b, and in other figures, indicates that the transition did not occur.

The Rydberg blockade may be used to implement a Controlled-Z (CZ) gate with the atomic system of the quantum computer 30. As shown in the quantum circuit of figure 5, a CZ gate may be used with two Hadamard (H) gates, one each side of the CZ gate, to form a CNOT gate 70. The CNOT gate flips a target qubit state if, and only if, a control qubit is in the state | 1 >. The CNOT 70 is implemented as follows: the target (T) qubit atom is operated on with a first H gate 72; then the T and C atoms are operated on by the CZ gate; then the T atom is operated on again by a further second H gate 74. The CNOT gate is an important gate in quantum computing because it may be shown that any quantum algorithm may be implemented by combinations of CNOT gates and/or single qubit operations changing the qubit state to any arbitrary state around the Bloch sphere.

The CNOT gate and the CZ gate are shown below in matrix form in equations 10 and 11 respectively.

$$\begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

[Equ. 10]

$$\begin{bmatrix} 1 & 0 & 0 & 0 \\ 0 & 1 & 0 & 0 \\ 0 & 0 & 1 & 0 \\ 0 & 0 & 0 & -1 \end{bmatrix}$$

[Equ. 11]

The atomic states of a two-qubit neutral atom system may be used to form a gate that, together with a global phase of $\pi$, is equivalent to the CZ gate as shown in equation 12.

$$\begin{bmatrix} -1 & 0 & 0 & 0 \\ 0 & -1 & 0 & 0 \\ 0 & 0 & -1 & 0 \\ 0 & 0 & 0 & 1 \end{bmatrix} = e^{i\pi} \begin{bmatrix} 1 & 0 & 0 & 0 \\ 0 & 1 & 0 & 0 \\ 0 & 0 & 1 & 0 \\ 0 & 0 & 0 & -1 \end{bmatrix} = e^{i\pi} \mathrm{CZ}.$$

[Equ. 12]

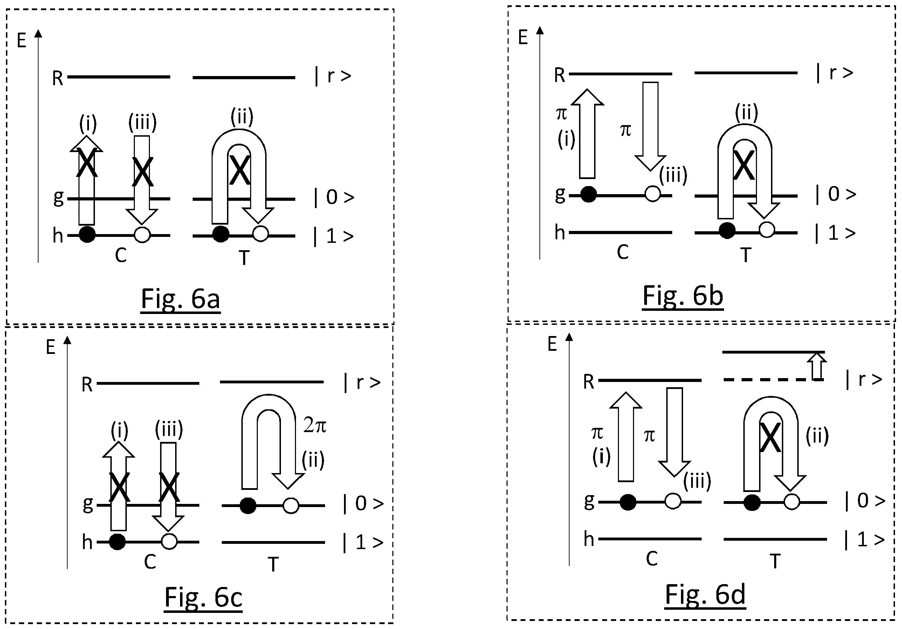

Figures 6a-6d show an example of how the above CZ gate may be implemented using the Rydberg blockade. In this example the CZ gate is implemented using three time-consecutive electromagnetic fields labelled (i), (ii) and (iii) respectively in the figures. Field (i) is a $\pi$-pulse operating on the control qubit (C atom). After field (i) has operated on the C atom, the second field (ii) operates on the target qubit (T atom). This second field is a $2\pi$-pulse. After field (ii) has operated on the T atom, the third field (iii) operates on the control qubit (C atom). This third field is a $\pi$-pulse. This pulse sequence may be referred to as a '$\pi$-$2\pi$-$\pi$ mechanism' or '$\pi$-$2\pi$-$\pi$ pulses'. Methods and systems presented herein may utilise such a '$\pi$-$2\pi$-$\pi$' mechanism, however it should be appreciated that other pulse sequences for driving the quantum computer may be used, for example but not limited to, a '$\pi$-$\pi$-$2\pi$-$\pi$-$\pi$' mechanism for a CCZ gate or another MCZ-gate. A CCZ gate has two control 'C' qubits (such as q0 and q1) and a single target'T' qubit (such as q2), therefore the implementing pulses may be as follows: A) the first $\pi$-pulse operates on one of the two control qubits, such as q0; B) the second $\pi$-pulse operates on the other of the two control qubits, such as q1; C) the $2\pi$-pulse operates on the target qubit q2; D) the third $\pi$-pulse operates on the same qubit targeted in B), such as q1; E) the fourth $\pi$-pulse operates on

the other of the two control qubits, such as q0.

Figures 6a-6d shows the resulting atomic transitions for the C and T atoms when this pulse sequence is imparted wherein each of the figures 6a-6d show a different set of initial atomic states of the combined C-T atomic system. The black circles in the figures indicating the starting position of the atomic states whilst the white circles indicate the final positions after all the pulses (i)-(iii) have acted on the C-T atomic system.

Figure 6a shows the effect of the pulses when both the C and T atoms start in the lower h energy level (hence both in qubit state $|1>$). None of the pulses (i), (ii) or (iii) are at the resonant wavelength to promote the atoms to the Rydberg energy level and therefore both the C and T atoms make no transitions with any of the input pulses (i)-(iii).

Figure 6b shows the effect of the pulses (i)-(iii) when the C atom starts at the higher g energy level (hence in qubit state $|0>$) whilst the T atom starts in the lower h energy level (hence in qubit state $|1>$). The (i) pulse causes the C atom to transition from the g to the R energy level, incurring a $\pi$ phase factor. The (ii) pulse is off-resonance for the h-R energy level transition so the T atom stays at the h energy level and does not make an atomic energy level transition upon receiving the (ii) pulse. The (iii) pulse causes the C atom to transition from the R energy level back to the g energy level, incurring a further $\pi$ phase factor. The total phase factor imparted onto the two-qubit quantum system with the (i)-(iii) pulses is therefore $2\pi$.

Figure 6c shows the effect of the pulses (i)-(iii) when the C atom starts at the lower g energy level (hence in qubit state $|1>$) whilst the T atom starts in the higher g energy level (hence in qubit state $|0>$). The (i) pulse does not cause the C atom to transition from the g to the R energy level because it is off-resonance. The (ii) pulse is on-resonance for the g-R energy level transition so the T atom transitions up to the R energy level and back to the g energy level, picking up a $2\pi$ phase factor. Like the (i) pulse, the (iii) pulse does not causes the C atom to transition. The total phase factor imparted onto the two-qubit quantum system with the (i)-(iii) pulses is therefore $2\pi$.

Figure 6d shows the effect of the pulses when both the C and T atoms are in the higher g energy level (hence both in qubit state $|0>$). The (i) pulse causes the C atom to transition from the g to the R energy level, incurring a $\pi$ phase factor. The temporary transition of the C atom to the Rydberg state imposes a Rydberg blockage to the T atom, thus preventing the (ii) pulse transitioning the T atom from the g to the R back to the g energy level. The (iii) pulse causes the C atom to transition from the R energy level back to the g energy level, incurring a further $\pi$ phase factor. The total phase factor imparted onto the two-qubit quantum system with the (i)-(iii) pulses is therefore $2\pi$.

The above phase factors incurred from the (i)-(iii) pulse sequence give rise to the matrix values on the left-hand side of equation 12.

The above is an example of a CZ gate that can be used to generate a CNOT gate, as discussed above, however other gates may be used using similar principles of a pulse sequences utilising the Rydberg blockade. The effect of the Rydberg blockade entangles the two qubits in the system described above, but it is to be understood that other entanglement mechanisms may be used and more than two qubits may be entangled by the Rydberg blockade.

When a quantum algorithm requires multiple gates, for example multiple CNOT gates, the list of gates may require long sequences of pulses to control the qubits. The longer the sequence of pulses, the higher the likelihood that the atomic system providing the quantum computing regime decoheres and the ability to perform the full set of quantum computation processes collapses.

General comments about the neutral atom quantum computer

The atoms of a neutral atom quantum computer used by the methods and systems described herein, may be formed of any of the alkali metal atoms or Group 1 atoms of the periodic table; namely, Lithium (Li), Sodium (Na), Potassium (K), Rubidium (Rb), Caesium (Cs), and Francium (Fr). An advantage of alkali element atoms is that they are suitable for laser cooling. Although atoms used in the ensemble of a neutral atom quantum computers are typically alkali elements, other elements may be used in the alternative including, but not limited to, alkali earth elements where one of the two valence electrons is promoted to a metastable state before being transitioned to a Rydberg state for implementing a blockade effect. Of the Alkali elements, neutral atom quantum computers may preferably use heavy alkali atoms Rb and Cs. Such heavy alkali atoms have relatively large hyperfine energy splittings in the excited manifolds of the first resonance lines. Such hyperfine states allow for qubit measurements by light scattering.

The method herein describes examples using a Rydberg state to entangle the qubits. Rydberg mediated quantum information processing can be implemented using the blockade effect or other Rydberg related effects. The Rydberg state used by the method may be any of the states in the Rydberg series for that atom-type. Rydberg states are not long-lived states and have a finite lifetime due to radiative decay. The amplitude, hence, Rabi frequency, of the electromagnetic pulse to excite an atom to a Rydberg state may vary, which affects the speed at which the transition takes place. A fast transition minimises spontaneous emission, but a slow transition maximises Rydberg blockade effectiveness. The choice of EM pulse amplitude and duration may therefore be a trade-off between these two factors. An advantage of using the Rydberg blockade is that as long as the value of the blockade shift in the target atom energy level is large enough, then the blockade does not need to be further controlled in terms of energy-shift magnitude for the effect of the blockade to be present and implement the gate functionality. Furthermore, the interaction range, in terms of atom-atom distance, is large enough so that atoms involved in the blockade effect can be spaced far enough apart so that they are optically resolvable without needing to further move the atoms from their positions after the interaction. The Rydberg blockade may be optimised for MHz range of gate-speed operations due to the finite lifetime of the energy states. The Rydberg blockade effect from exciting one atom may affect (hence block the subsequent Rydberg transition of) more than one other neighbouring atom, for example an ensemble of atoms. Furthermore, the blockade may in principle be initiated by a control field transitioning atoms from a lower energy hyperfine state (than shown in the figures herein) to the Rydberg state.

Different types of traps may be used including, as previously described, Magneto-Optical Traps (MOT). Other traps may be used including Far-Off Resonance optical Traps (FORT) and magnetic traps such as cryogenic magnetic traps. Multiple traps may be formed as described, for example by optical trapping in lattices formed by counterpropagating beams such as in the near infrared or by using long wavelength $CO_2$ lasers. Other alternatives include vapour cells. The spatial control and positioning/re-positioning of the atoms may use different types of devices and systems including but not limited to electro-optic deflectors, acousto-optic deflectors and micro-opto-electromechanical systems.

Pulse sequencing

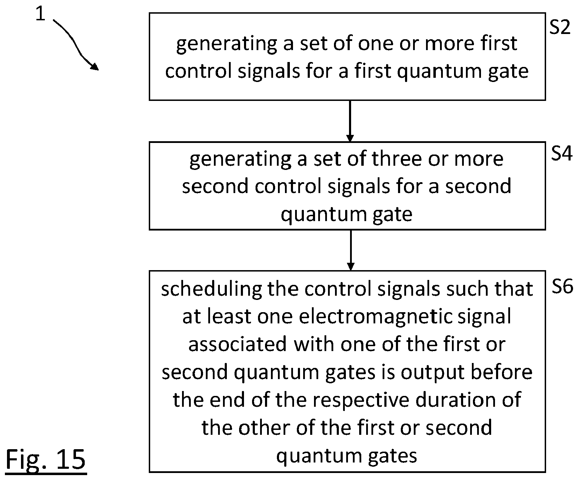

There is therefore presented, and as exemplified in figure 15, a method 1 for scheduling control signals for driving a plurality of electromagnetic sources. The electromagnetic, EM, sources are for controlling a plurality of atoms of a neutral atom quantum computer. The control of the atoms is via using a plurality of quantum gates associated with a gate sequence. Each of the plurality of atoms is associated with a corresponding different qubit of a plurality of qubits. At least a first atom of the plurality of atoms corresponds to a first qubit of the neutral atom quantum computer, and at least a second atom of the plurality of atoms corresponds to a second qubit of the neutral atom quantum computer. The plurality of electromagnetic sources comprises at least a first electromagnetic source and a second electromagnetic source. The first electromagnetic source is operable on at least one of the first and second qubits. The second electromagnetic source is operable on at least the first and second qubits. The method comprises generating S2 a set of one or more first control signals for a first quantum gate. At least one of the first control signals is for outputting an electromagnetic signal from the first electromagnetic source. The first quantum gate is associated with operating on at least one of the first qubit or second qubit; the first gate operating for a first duration. The method further comprises generating S4 a set of three or more second control signals for a second quantum gate. At least one of the second control signals is for outputting an electromagnetic signal from the second electromagnetic source. The second quantum gate is associated with operating on at least the first qubit and second qubit. The second quantum gate operates for a second duration. The method further comprises scheduling S6 the control signals such that at least one electromagnetic signal associated with one of the first or second quantum gates is output before the end of the respective duration of the other of the first or second quantum gates.

The method therefore provides for control pulses being output that lead to the different resulting EM pulses being overlapped in time such that different qubits are operated on simultaneously. This in turn allows for the shortening of the duration of the whole EM pulse sequence for the quantum circuit that implements a quantum algorithm. The shorter the time-duration, the better the chance that the quantum system does not decohere.

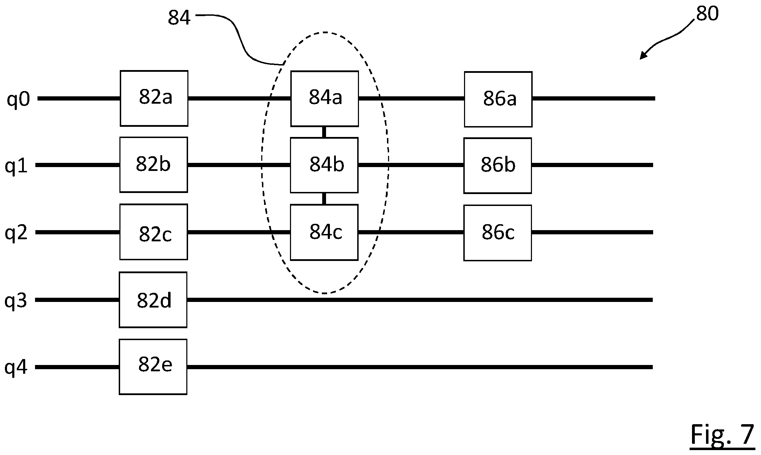

The gate sequence may be derived from a quantum circuit such as the example circuit 80 shown in figure 7. In figure 7, there are five qubits labelled q0, q1, q2, q3, q4. In this example, each qubit is operated on, in parallel, by a single qubit gate respectively labelled 82a-e. After these single qubit gates there is a multiple qubit gate 84 involving qubits q0, q1 and q2. Such a gate may be a Multi-CZ ('MCZ') gate such as a CCZ gate and in the following discussion this is referred to as a CCZ gate. The multiple qubit gate is further labelled as 84a-c with each label associated with a different qubit. After the multi-qubit gate 84, three more single qubit gates labelled 86a-c then operate, in parallel, respectively on qubits q0, q1 and q2.

Existing prior art approaches to implementing the example quantum circuit of figure 7 using '$\pi$-$\pi$-$2\pi$-$\pi$-$\pi$' pulses for the CCZ gate 84 would: a) fully implement all the pulses for the single qubit gates 82a-e before implementing CCZ gate 84; b) fully implement all the '$\pi$-$\pi$-$2\pi$-$\pi$-$\pi$' pulses for gate 84 before implementing all the single qubit gate pulses 86a-c. This overall pulse sequence for the whole circuit 80 takes a long time and increases the likelihood of the quantum system decohering.

In one example, the present application may provide a pulse sequence to shorten this overall time. The ordering and timing of pulses may result in the overlap, in time, of pulses being executed on the quantum system. This example of pulse overlap may be termed 'parallelisation'.

This process may comprise: A) identifying a multi-qubit gate, such as CCZ gate 84,: B) identifying any one or more qubits, such as q3 and q4, of the circuit that are not involved with the identified multi-qubit gate 84 and that may be performed in parallel with the multi-qubit gate 84; C) scheduling the control pulses such that at least one of the 'non-involved' qubits, preferably more than one or all of the non-involved qubits, are operated on at least partially at the same time as the involved qubits. The 'involved' qubits here denote the qubits used in the identified multi-qubit gate 84, which in figure 7 are q0, q1 and q2. The non-involved gates may be single qubit gates or multi-qubit gates.

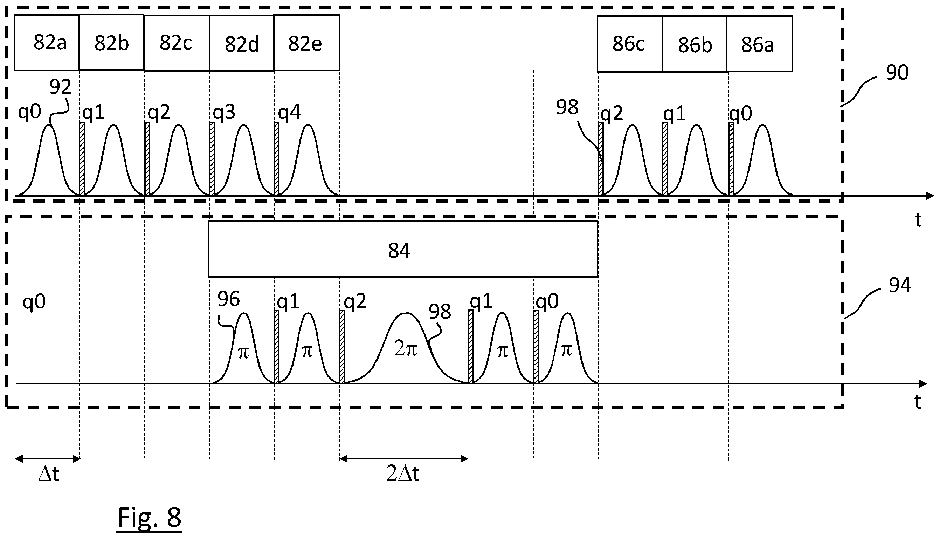

Figure 8 shows an example of applying this principle to the quantum circuit 80 of figure 7, wherein like numerals represent like features. Figure 8 assumes that two electromagnetic ('EM') sources are used to implement the quantum circuit 80. The first source is an electromagnetic source having a wavelength resonant with transitioning the atoms from the g to h (or vice versa) hyperfine states. This is referred to herein for discussion purposes as the 'Raman channel' or 'hyperfine channel' 90 wherein this channel 90 outputs pulses 92 of electromagnetic radiation of a suitable amplitude and time-duration to affect the required phase change (in θ (see equation 4)) for the qubit gate. It is assumed a single pulse 92 from this channel is used to implement a single qubit gate.

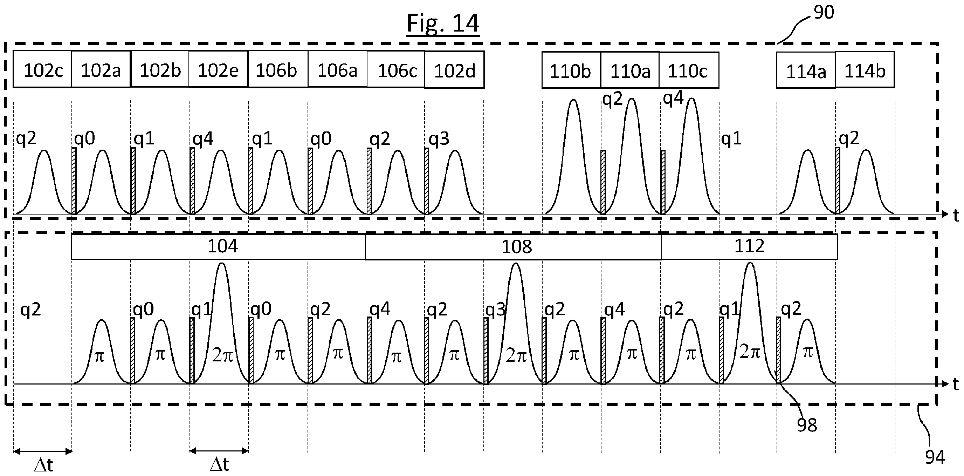

The second source is an electromagnetic source having a wavelength resonant with transitioning the atoms from the g hyperfine state to the Rydberg 'r' state (or vice versa). As discussed above, this shall be referred to as the 'Rydberg channel' 94. The Rydberg channel outputs π-pulses 96, or 2π-pulses 98. For purposes of this example each of the Rydberg channel π-pulses 96 and hyperfine pulses 92 are assumed to either have the same or similar time duration, however in other examples they may be different. The term 'π-pulse' indicates the phase imparted by the pulse if it causes the respective atomic transition to occur. Figure 8 shows time 't' going from left to right and a plurality of sequential time slots of Δt or multiples thereof, such as 2Δt, separated by dashed vertical lines. In this example, the π-pulses 96 of the Rydberg channel 94 and the pulses 92 of the hyperfine channel 90 substantially occupy a single Δt time slot whilst the 2π-pulses 98 of the Rydberg channel 94 substantially occupy a 2Δt time slot. In other examples these pulses may occupy different length time slots, for example the 2π-pulses 98 may occupy a single Δt time slot as shown in the example of figure 14.

It is assumed that each time slot Δt and 2Δt includes time for the relevant EM pulse duration as well as a section of time 98, prior to the pulse, for any necessary re-alignment of the channel to address a different qubit. Only one time realignment section 98 is labelled in figure 8, however other similar sections are shown in the figure. Alignment (or 'retargeting') time sections 98 may be included before or after the relevant pulse in the time slot and may be any particular time-length required to perform any necessary re-alignment of the channel to a different qubit. It is also to be understood that in similar examples with a plurality of hyperfine channels or where the same hyperfine channel can act on multiple qubits, one or more alignment time sections may not be required.

In figure 8, the EM hyperfine channel source is already configured to address qubit q0 and in the first time slot imparts a pulse to qubit q0 to implement single qubit gate 82a. After this, the same EM source is re-configured to address qubit q1 with a pulse to implement single qubit gate 82b. After this, the same EM source is re-configured to address qubit q2 with a pulse to implement single qubit gate 82c. After this, the same EM source is re-configured to address qubit q3 with a pulse to implement single qubit gate 82d. After this, the same EM source is re-configured to address qubit q4 with a pulse to implement single qubit gate 82e. Using the parallelisation process described above, qubits q3 and q4 are identified as non-involved qubits, i.e., gate 84 does not involve these qubits. As such the Rydberg channel 94 begins its gate operations on the qubits at the same time as the time slot used to address qubit q3. It is to be understood that, in this example, the Rydberg channel 94 may begin its gate pulses any time after the hyperfine channel 90 finishes operating on qubit q2 to implement gate 82c. The Rydberg channel 94 imparts a 'π-π-2π-π-π' pulse sequence respectively to qubits q0, q1, q2, q1, q0 to implement gate 84. After the Rydberg channel 94 has completed its 'π-π-2π-π-π' pulse sequence, the hyperfine channel sequentially implements the last three single qubit gates 86c, 86b and 86a by sequentially operating on qubits q2, q1, q0 respectively.

The prior art method of scheduling these pulses would have required a total of 14Δt, however figure 8 shows that utilising parallelisation uses only 12Δt. The above example of parallelisation in figure 8 thus saves two of the time slots Δt from the total time that the abovementioned prior art would have required.

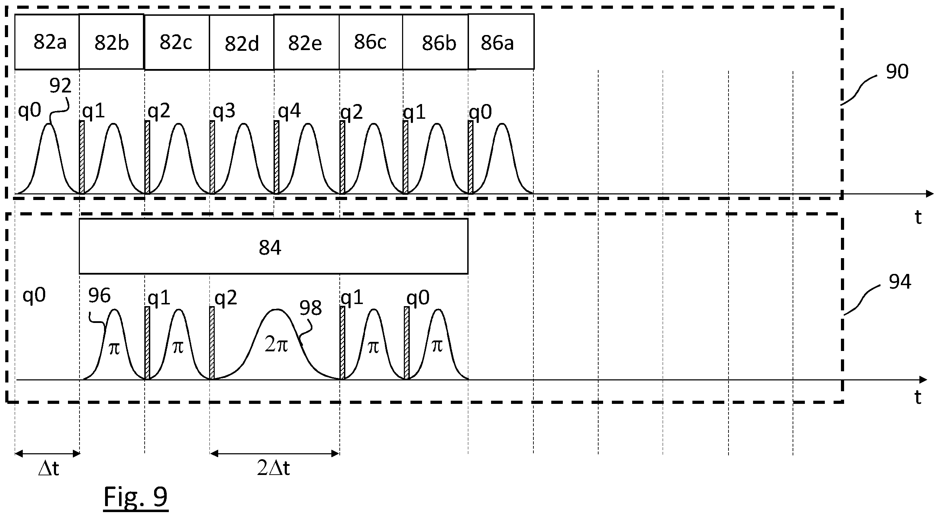

Figure 9 shows a further example of developing a control pulse sequence for the quantum circuit in figure 7. Some features in figure 9 are similar to those of figures 7 and 8, wherein like references represent like features. The parallelisation of figure 8 is also incorporated into figure 9 however, in figure 9, at least some of the single qubit gate pulses of the identified 'involved' qubits q0, q1, q2 are also performed at a parallel time, or at least partially overlap in time, with the pulse sequence of the Rydberg channel 94. As described above for figure 7, the non-involved qubits are qubits q3 and q4. In figure 9, the single qubit gates of the involved qubits q1 and q2 overlap in time with the first two Rydberg channel π-pulses of the 'π-π-2π-π-π' pulse sequence. The hyperfine channel pulse input to q1, for providing gate 82b, overlaps in time with the first (leftmost in figure 9) π-pulse of the 'π-π-2π-π-π' pulse sequence of the Rydberg channel 94. The hyperfine channel pulse input to q2, for providing gate 82c, overlaps in time with the second leftmost π-pulse of the 'π-π-2π-π-π' pulse sequence of the Rydberg channel 94. The hyperfine channel pulses input to q3 and q4, for providing gates 82d and 82e, overlap in time with the middle 2π-pulse of the 'π-π-2π-π-π' pulse sequence of the Rydberg channel 94. The second hyperfine channel pulse input to q2, for providing gate 86c, overlaps in time with the fourth pulse (which is a π-pulse) of the 'π-π-2π-π-π' pulse sequence of the Rydberg channel 94. The second hyperfine channel pulse input to q1, for providing gate 86b, overlaps in time with the final pulse (which is a π-pulse) of the 'π-π-2π-π-π' pulse sequence of the Rydberg channel 94. The second hyperfine channel pulse input to q0, for providing gate 86a, occurs after and does not overlap in time with, the 'π-π-2π-π-π' pulse sequence of the Rydberg channel 94. The total time for executing all the pulses for this example is 8Δt, which is a saving of 6Δt from the 14Δt achieved by the prior art.

The above control pulse sequence may be determined by identifying which one or more qubits, from the involved qubits of the multi-qubit gate, comprises a quantum state that has not begun to influence another qubit's evolution. In other words, a pulse for single qubit gates acting on an involved qubit, may be run in parallel with the pulse sequence of the multi-qubit gate provided that the said single qubit gate pulse has been fully executed before the pulse from the Rydberg channel 94 acts on the same qubit. These above-identified qubit gates may have single qubit gates executed upon them by the hyperfine channel 90.

In this example the multi-qubit gate effectively 'absorbs' neighbouring single qubit gates into the gates that may be executed in parallel with it. The method may provide different methods of 'absorbing' gates. The absorption processes may be implemented by analysing the quantum circuit and grouping gates according to a set of rules. The ordering of the control signals output to the EM sources (for transitioning the atoms) may be derived from these groupings. These rules may differ depending on the number and type of EM sources available. For example, a neutral atom quantum computer with one Rydberg channel and one Raman channel may group quantum gates with a different set of rules, hence resulting in different groups, than a neutral atom quantum computer with two or more Rydberg channels and one Raman channel. There may be further rules for creating an ordering of control signals once the qubit gate groupings are made. The method may alternatively use a different set of rules for creating the control signal order.

Carrying on the example with one Rydberg channel and one Raman channel, the method may identify a plurality of control pulses of single qubit gates, to optionally run in parallel with a multi-qubit gate by: A) firstly identifying which single qubit gate pulses are applied to qubits not involved with the qubit gate; b) secondly identify, from the involved qubits, which of those has a state that has not started to influence another qubit's evolution. The above two identified sets of one or more single qubit gate control pulses are then candidates for running in parallel with the pulse sequence of the multi-qubit gate. Further methods for determining scheduling of these identified control pulses are presented elsewhere herein.

In figure 9, the pulse for single qubit gate 82b to be applied to q1 can be executed in parallel with the multi-qubit pulse sequence of the Rydberg channel 94 because the pulse for gate 82b can occur before the first Rydberg pulse acts on q1. This is possible because the Rydberg channel in this example executes its 'π-π-2π-π-π' pulse sequence on the respective qubits in turn: q0; q1; q2; q1; q0. The requirement, in this example, that q0 is the first qubit to be acted on by the 'π-π-2π-π-π' pulse sequence entails that there is a time slot prior to the first q1 Rydberg time slot that is available where q1 may be acted on by another electromagnetic source to change its quantum state. In other words, the hyperfine channel 90 may apply a single qubit gate pulse to q1 whilst q0 receives the first Rydberg π-pulse of the 'π-π-2π-π-π' pulse sequence. The above example in figure 9 is one example of how the method may be used. The considerations for creating the pulse scheduling for figure 9 may apply to other quantum circuit gate configurations.

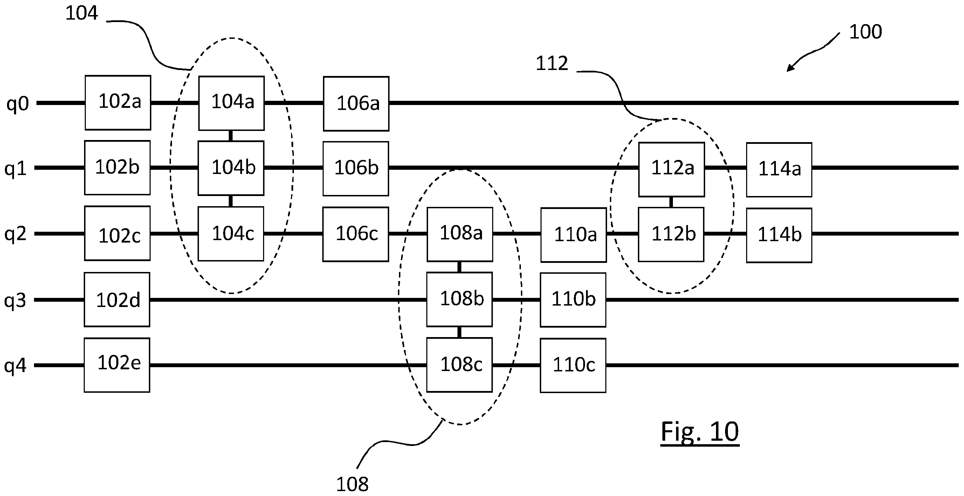

Figure 10 shows a further example of a quantum circuit 100 that the method may be applied to. Figure 10 is similar to figure 7, but has a different set of gates, otherwise like references in the figures represent like features. In figure 10, in the quantum circuit order, a set of single qubit gates 102a-e act upon qubits q0-q4 respectively. After gates 102a-e, the quantum circuit 100 requires a multi-qubit gate 104 to operate on (hence involve) qubits q0, q1 and q2 with respective gate actions 104a-c. After gate 104, the quantum circuit 100 requires three single qubit gates 106a-c to act, respectively, on qubits q0, q1 and q2. After gates 106a-c the quantum circuit 100 requires a further multi-qubit gate 108 to operate on (hence involve) qubits q2, q3 and q4 with respective gate actions 108a-c. After gate 108, the quantum circuit 100 requires three single qubit gates 110a-c to act, respectively, on qubits q2, q3 and q4. After gate 110, the quantum circuit 100 requires a further multi-qubit gate 112 to operate on (hence involve) qubits q1 and q2 with respective gate actions 112a and 112b. After gate 112, the quantum circuit 100 requires two single qubit gates 114a and 114b to act, respectively, on qubits q1 and q2. In figure 10 there are two instances of three-multi-qubit gates 104, 108 and one instance of a two-multi-qubit gate 112. In this example the three-qubit gates 104, 108 are both CCZ gates requiring a 'π-π-2π-π-π' pulse sequence and the two-qubit gate 112 is a CZ gate requiring a 'π-2π-π' pulse sequence. Gates 110a-c, in this example have a higher amplitude than other single qubit gates.

There now follows an example of how to create a control pulse schedule for the gates of figure 10. At least a portion of the method may be executed by a classical computer. The principles and method steps used in this example may be applied to other examples herein of quantum circuits comprising at least one multi-qubit gate and at least one single qubit gate. Preferably the method is applicable to quantum circuits comprising a plurality of multi-qubit gates and/or a plurality of single-qubit gates. Multi-qubit gates may be any gate, but for purposes of this discussion we shall assume they are MCZ gates.

In this example it is assumed that there is one hyperfine channel 90 using a Raman laser and one Rydberg channel 94, however the principles of the method may extend to more than one Rydberg channel and/or one or more Hyperfine channels 90. As in the above examples in figures 8 and 9 we assume the control pulses for the single qubit gates and the π-pulses of the 'π-π-2π-π-π' and 'π-2π-π' pulse sequence of the Rydberg channel 94 occupy one unit of time Δt. In this example the 2π-pulses of the Rydberg channel 94 also occupy a single Δt time slot by having the pulse amplitude increased compared to the π-pulses. Included with these time periods are any time sections 98 for reconfiguring the EM source.

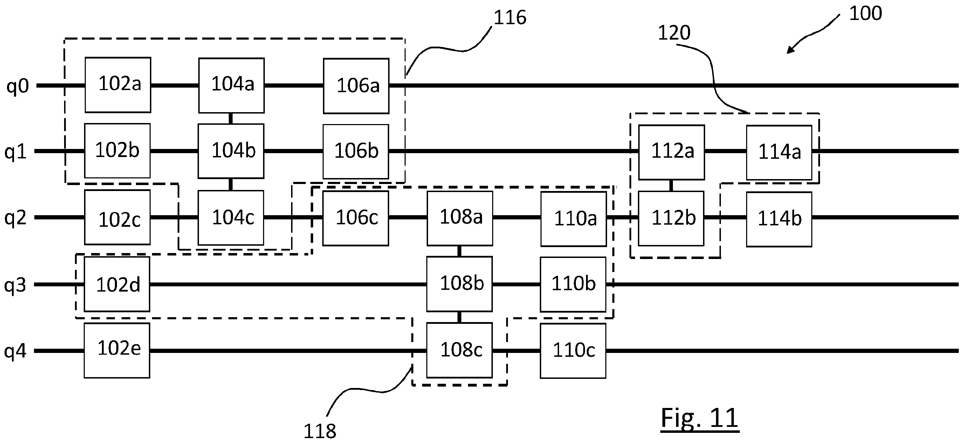

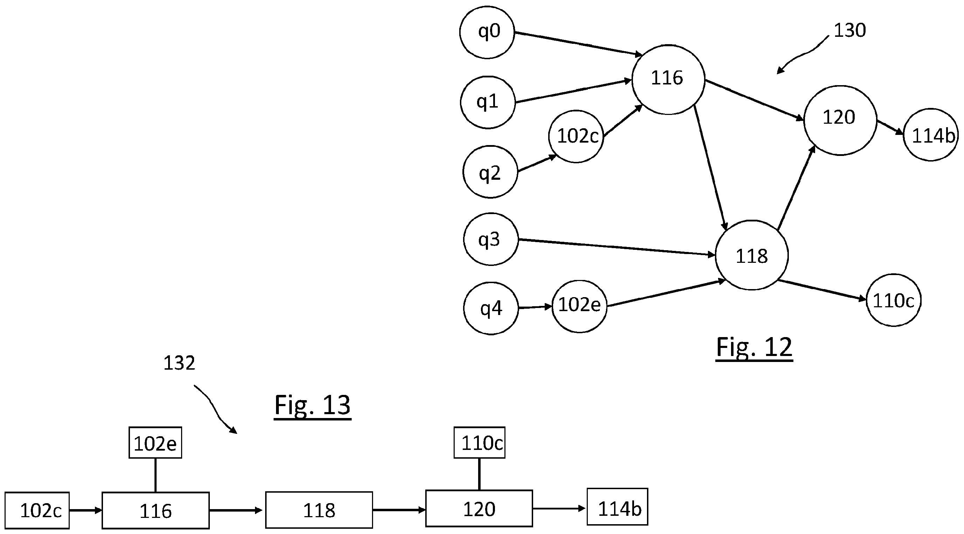

The first step is associated with the 'absorption' process described above wherein groups of gates are formed. Figure 11 shows the quantum circuit 100 of figure 10 with gate grouping 116, 118, 120 used to determine the control pulse sequence for implementing the quantum circuit 100. Figure 12 is the dependency graph 130 generated by using the method and figure 13 is the gate execution order 132 derived from the dependency graph. Figure 14 is the sequence of control pulses used to execute the quantum circuit.

The method analyses the quantum circuit 100 to identify at least one, preferably a plurality, more preferably all the MCZ gates 104, 108, 112. For each identified MCZ gate a further identification of a set of one or more single qubit gates is made for that identified MCZ. The single qubit gates in the identified set may be gates immediately occurring before and/or after the MCZ in the quantum circuit. Preferably the method identifies single qubit gates before and after the MCZ. The number of single qubit gates before the MCZ that may be included in the set are upto and including n-1 wherein 'n' is the number of qubits involved with the MCZ. The number of single qubit gates after the MCZ that may be included in the set are also upto and including n-1 wherein 'n' is the number of qubits involved with the MCZ. As shown in figure 11, MCZ gate 104 is associated with three qubits q0, q1, q2. Therefore, the maximum number of preceding single qubit gates that can be included in the set of single qubit gates, for that MCZ is 2. Furthermore, the maximum number of single qubit gates after the MCZ in the circuit 100 that can be included in the set of single qubit gates, for that MCZ is also 2. In other words, there may be a group of gates associated with, and including, a multi-qubit gate, wherein the group includes (or "absorbs") the single-qubits that are on (n-1) of the involved qubits. This means max (n-1) single qubit gates before and max (n-1) qubit gates after, with the added nuance that the gates absorbed before and after the MCZ are acting on the same qubits (i.e. there is at least one qubit whose gates are not absorbed). In this example gates 102a, 102b, 106a, 106b are included in the set. The set of single qubit gates and its associated MCZ form a group 116. Similar groups are made for MCZ 108 and MCZ 112. The single qubit gates selected to be in the group may be performed in parallel with the MCZ gate. This process of grouping allows for simpler further analysis of the circuit 100 of how to schedule the control pulses.

The choice of which single qubit gates are included in the set, hence group 116, 118, 120, may be arbitrary and may be determined randomly by a classical computer or by user choice. If a single qubit gate was a candidate for including in the group but did not get included in the group, then the associated qubit is selected to be the first qubit to receive the first π-pulse of the Rydberg channel 94 for executing the MCZ gate. Thus, in figure 11 single gate 102c is a candidate for including in the group 116 but is not included in the group 116, therefore qubit q2 (associated with gate 102c) receives the first π-pulse of gate 104 of the Rydberg channel 94 as shown in figure 14. Similarly for group 118, gate 102e (for q4) is an unselected candidate and therefore q4 becomes the qubit to receive the first π-pulse of gate 108 of the Rydberg channel 94 as shown in figure 14. Similarly, the qubit to receive the first π-pulse of an MCZ gate also receives the last π-pulse of the same MCZ gate as shown in figure 14. The qubit associated with the unselected gate may be referred to as a 'border' qubit. Preferably all the single qubit gates associated with the border qubit that occur immediately before and after the MCZ are unselected. For example, for group 116, gate 102c is a candidate but is not selected to be in the group 116. This gate is associated with qubit q2, therefore the single qubit gate 106c, also associated with q2 is not selected. In a similar manner, group 118 also does not select single gates 102e and 110c because both are associated with the same qubit q4.

A further step of single-gate-consolidation may be implemented either before or at the same time as identifying the sets of single qubit gates. This optional step identifies successive and immediately adjacent single qubit gates acting on the same qubit and converts them into a composite single qubit gate.

As discussed elsewhere herein, both gates of involved qubits and non-involved qubits may be executed in parallel with the MCZ. The method may prioritise, for parallel execution, single qubit gates of involved qubits over single qubit gates of non-involved qubits to be executed because if the non-involved gates were selected then the Rydberg channel 94 would have to wait while doing nothing before it can execute the MCZ. Conversely, the method can afford to wait to execute the single-qubit gate of the non-involved qubit.

Again, referring to figures 10-14, there is provided optional further steps for implementing the method. The grouping process (also termed 'absorption' process) may also be implemented according to the following rules wherein the rules are applied in the following priority order 1-3. It is understood that in other examples, any one or more of these rules may not be applied or may be adapted or may be re-ordered in the priority list, or other rules may apply. Furthermore, any other conditions listed in any other examples herein may also be implemented with these rules. Before the rules are implemented, the method may determine an initial order in which MCZ's should be executed by analysing the quantum circuit 100, identifying one or more common qubits between at least two of the MCZ gates and determining which MCZ gate operates on the common qubits first; and prioritizing that said determined MCZ gate.

Grouping Rule 1. For any first and second MCZ gates wherein the first MCZ gate operates on a border qubit of its group before the second MCZ gate, wherein upto one single qubit gate for the border qubit exists in the quantum circuit; an unselected single qubit gate associated with the border qubit of the first MCZ, should be included in the second MCZ group. For example, in figure 11, MCZ gate 104 operates on qubit q2 before MCZ gate 108, therefore in this rule 104 is the first MCZ gate and 108 is the second MCZ gate. Group 116 for MCZ gate 104 does not select gates 102c and 106c for inclusion in the group, rendering q2 the border qubit for group 116. The single qubit gate existing between MCZ gate 104 and 108 is the gate 106c. Gate 106c is therefore prioritised for inclusion in the group 118 for the MCZ gate 108. One of the undesired cases that may want to be avoided is that a single-qubit gate is left unabsorbed between two consecutive MCZs in the execution list, and the single-qubit gate is stuck between the two MCZs in the dependency graph. After the execution of the first MCZ, the Rydberg channel will have to wait for the Raman channel to take care of this remaining single-qubit gate while doing nothing. This case could occur only when two MCZs with a common qubit are prior to execution one right after another, but a single-qubit gate is stuck between.

Grouping Rule 2. Single qubit gates that act on the same qubit and that occur immediately before and after an MCZ should be included within the group for that MCZ. For example, in the figure 11, if gate 102d did not exist then the group 118 would alternatively include 102e and 110c in the group instead of 102d and 110b. Paralleling two operations makes more sense than doing only one.

Grouping Rule 3. For a given qubit, if only a single qubit gate for that qubit occurs immediately before or after an MCZ, that gate should be included within the group for that MCZ. In other words if there is only one single qubit gate for a qubit that exists either before or after the MCZ, that qubit gate should be included within the MCZ's group.

Applying these rules to the quantum circuit 100 results in:

A) group 116 wherein the single qubit gates are absorbed into the group 116 arbitrarily such that the single qubit gates of q2 that are immediately adjacent to gate 104 are not selected for the group;
B) group 118 selecting the single qubit gates for q2 and q3 to abide by Rule 1;
C) group 120 selects the single qubit gate for q1 arbitrarily.

Again, referring to figures 10-14, there is provided optional further steps for implementing the method. These further steps, including any of the ordering rules, are optional. The output of the grouping process provides one more MCZ 'gate-groups' 116, 118, 120 and one or more single qubit gates that have not been included in such a group. The method may further provide considerations for ordering the control pulses for these groups 116, 118, 120 and ungrouped single qubit gates. The gate groups and remaining single qubit gates may be represented by nodes in a dependency graph 130.

The method may generate a dependency graph, such as the example shown in figure 12 for the circuit in figure 11, to determine the order that single qubit gates or gate-groups are executed. When generating the ordered execution list 132 the dependency graph 130 may be used to determine which gates or groups are 'ready-to-be-executed' or 'ready' nodes. For example, at the beginning of determining the execution list 132, the ready nodes are 102e and 102c. Once one of these ready nodes has been selected to be put into the execution order list 132, the removal of that node may open up the 'readiness' of other nodes. For example, in figure 13, node (hence gate) 102c is selected to be executed first. Once this node has been selected, it may then be thought of as being virtually removed from the dependency graph 130m rendering other nodes to be ready. Once node 102c is removed, then node 116 becomes 'ready' alongside previously 'ready' node 102e.

The method may therefore select nodes to be implemented on an execution list 132 from a list of ready nodes from a dependency graph 130. The method may select between multiple nodes based on any one or more of the following rules. It is understood that in other examples, any one or more of these rules may not be applied or may be adapted or may be re-ordered in the priority list, or use other rules. Furthermore, any other conditions listed in any other example herein may also be implemented with these rules.

Ordering Rule 1. The method may assign a higher execution priority to a first single qubit gate (for a first qubit) over a second single qubit gate (for a second qubit) by determining that:

a first gate-group, associated with the first qubit, may be executable immediately after the execution of the first single qubit gate;
and,

a second gate group, associated with the second qubit, requires the execution of:

i) the second single qubit and

ii) a further single qubit gate and/or gate-group
to become executable.

In other words, when the method chooses among several single-qubit gates, the method prioritises the single qubit gate nodes that could unlock a gate group and add it to the ready-to-be-executed set. In the cases where the ratio of single-qubit gates against gate groups is high, or generally otherwise, the priority may be to execute a gate group whenever possible because when gate groups are executed, the Raman (hyperfine) channel has potential parallel time slots for the single-qubit gates in the ready-to-be-executed set. Therefore, unlocking gate groups can be considered beneficial to the ordering process.

For example, the method selects, hence prioritises, node 102c over 102e in graph 130 because the execution of 102c yields node 116 to be immediately executable, whereas node 118 requires node 116 and node 102e to be executed before becoming executable itself.

Ordering Rule 2. The method may assign a higher execution priority to a first gate group over a second gate group when:

i) the execution of the first gate group immediately allows a single qubit gate node to become executable;
ii) the execution of the second gate group does not immediately allow a single qubit gate node to become executable.

In other words, whenever the method chooses one gate group among several gate groups, the method may privilege the ones that could unlock a single-qubit gate and add it to the ready-to-be-executed set. In the dependency graph 130, these may be the ones that precede single-qubit gates. If there are always multiple choices, the method may should choose the gate-group that was examined earlier in the absorbing process. Whenever a single-qubit gate follows right after a particular gate group after the absorption step, this single-qubit gate may, in this example, not be executed in parallel with the gate group (assuming the single qubit gate was an absorption candidate for the gate group). Thus, if this is the last gate group executed, the method may have to execute this single-qubit gate while the Rydberg channel is doing nothing. This doesn't violate the validity of the execution list, but the method could do better in terms of reducing the overall execution duration. By privileging such gate groups, the method may put gate groups, without a single-qubit gate following, later in the ordered execution list. In the preferred case, the last gate group in the whole circuit that the method may executes would be the actual last operation in the whole pulse-level execution.

Ordering Rule 3. This rule requires the iteration of the following cycle of two steps until there are no more gates or gate groups in the 'ready' list, or ready set, associated with the dependency graph 130.

Cycle step i) analysing the dependency graph to determine availability of one or more gate groups ready for execution: and if no gate groups are ready for execution, selecting a single qubit gate; wherein in selecting between a) a first single qubit gate executable in parallel with a gate group and b) a second single qubit gate not executable in parallel with a gate group, selecting the first single qubit gate.

Cycle step ii) analysing the dependency graph to determine availability of one or more gate groups ready for execution: and if one or more gate groups are ready for execution, determine whether there are any single qubit gates ready for execution; and if there are one or more single qubit gates ready for execution, selecting a gate group or single qubit gate for parallel execution with a further gate group previously selected for execution.

In other words, the cycles may be thought of as:

(I) If there is no MCZ in the ready set, at least one single-qubit gate is selected to be included in the execution list. The single-qubit gates that could be executed in parallel with the last MCZ executed are prioritised.

(II) If there are MCZs in the set, the method still examines, first, the single-qubit gates if there is any in the set. If parallelizing one of the said single qubit gates with the last MCZ executed is possible, the method does it with the maximum possible number of single-qubit gates while respecting the priority among the single-qubit gates. The method then executes a MCZ in either case.

Applying 'Ordering rule 3' to the example in figures 10-14 provides the following cycle mentioned in the previous section.

1. The method initiates the ordering process with the ready-to-be-executed set and the empty execution list.

2. Since node 102c can unlock gate group 116 but node 102e cannot, node 102c is added to the execution list, and the 'ready' list is updated.

3. Gate group 116 is added to the execution list because there is not yet any gate group executed for node 102e to be parallelized with.

4. Since 102e can be parallelized with gate group 116, these nodes are parallelised.

5. Gate group 118 is then selected.

6. Since 110c can't be parallelized with gate group 118, gate group 120 is then selected.

7. Since 110c can be parallelized with gate group 120, the two said nodes are parallelised.

8. Finally, 114b is selected and is executed alone.

The resulting execution list 132 of figure 13 can therefore be implemented by a series of control pulses represented in figure 14.

As described above, this ordering process is one example of an ordering process. Other ordering processes and rules may be used such as, but not limited to the example below.

Example of an alternative ordering process

In this example reference is made to CZ, CCZ and MCZ gates but the argument may apply to other types of multi-qubit gate. As a reminder the 'border qubit' is the qubit that is a) involved with the multi-qubit gate of the gate group but b) has none of its associated single qubit gates adjacent to the multi-qubit gate selected for inclusion within the group.

A qubit may be participating in a computation process when it starts to entangle with other qubits via multi-qubit gates. For most useful quantum algorithms every qubit experiences at least one multi-qubit gate in such computing-purposed circuits. In other words, in such quantum circuits, there is at least one MCZ (including for example CZ and CCZ) between the initialization of a qubit and its measurement.

As described elsewhere herein, any pair of consecutive single-qubit gates may be merged into one single-qubit gate. Every CZ gate may therefore be preceded by at most two single-qubit gates, and every CCZ may be followed by, at most, three single-qubit gates. The same holds for a general MCZ. These identified single-qubit gates should ideally be either absorbed by the MCZ in the grouping process described or be executed beforehand. For the first MCZ executed in the execution sequence, the single-qubit gate of this MCZ's border qubit should ideally be executed by the Raman channel without parallelization with the MCZ. During the execution of this single qubit gate, the Rydberg channel may be inactive by not outputting EM pulses to any qubits.

However, for the MCZs starting from the second one in line (in the order of gate group execution), the single-qubit gate (when it exists) of each MCZ's border qubit can be executed in parallel with the previous MCZ. In considering this there may be two disjoint cases: a) either the border qubit of the current MCZ is involved in the previous MCZ or b) it isn't. In the first case, a), if the border qubit has a single-qubit gate before the MCZ of its notional candidate group, then it would have the priority to be absorbed during the absorption step of the algorithm, as described above, and it wouldn't have become the border qubit. The logic may follow therefore that the resulting scenario available would be that the border qubit of the current MCZ is not involved in the previous MCZ. Thus, since this qubit is a non-involved qubit for the previous MCZ, the method may parallelize the single-qubit gate of the border qubit with the previous MCZ.

The method may therefore provide a simplified ordering process exploiting this observation. The method may carry out the same absorption step, however the method may no longer need to order the MCZs as previously presented in other examples, instead, the method executes the MCZs (this being the MCZs with absorbed single qubit gates) in the same order as how the MCZs were examined in the absorption step for purposes of grouping. For the non-absorbed single-qubit gate that must be executed before an MCZ gate-group, the method may parallelize it with the previous MCZ gate group (except for the first MCZ in the quantum circuit). To make this simplified algorithm work for all quantum circuits, including those which have qubits not experiencing a single MCZ, the method may use a dynamic set to keep track of the single-qubit gates that are ready to be executed. Whenever the method may have a free slot for parallelization (concerning non-involved qubits), the method may execute one such single-qubit gate. These single-qubit gates are usually the last ones before the measurement of the whole quantum system.

Examples with multiple EM sources for the multi-qubit gates

The processes described in the following examples may be used with other examples described herein. Any of the features described, for example certain processes and rules, may be isolated from the example and used in other examples and/or with other features from the processes and rules described underneath.

As described above, the method may use a single Rydberg channel and a single hyperfine channel. The method may also utilise a plurality of Rydberg channels and/or a plurality of hyperfine channels.

A channel in the following discussion involves all the EM sources required to implement the atomic transitions for a particular atom for a particular time bin. For purposes of the following discussion, it is assumed that the channel used to drive the multi-qubit transitions is a Rydberg channel whilst the channel used to drive the single qubit gate transitions is a Raman channel, although other types of EM sources may be used as discussed elsewhere herein.

In the single Raman/single Rydberg channel example described above, the Raman channel may be half occupied whilst the Rydberg channel is fully occupied. In one example, adding one or more further Rydberg channel may allow the method to more fully utilise the Raman channel.

As described above, after executing a pulse on a qubit, a channel takes time to retarget 98 to another qubit. Two Rydberg channels may be used in different ways to implement a quantum circuit. Two of these ways include parallel utilisation of the Rydberg channels and serial utilisation of the Rydberg channels. Parallel utilisation is described in more detail underneath but entails that the first Rydberg channel operates on a different set of qubits at a particular time than the second Rydberg channel such that a first MCZ is driven by the first Rydberg channel and not the second Rydberg channel, whilst the second MCZ is driven by the second Rydberg channel and not the first Rydberg channel. Serial utilisation is described in more detail underneath but entails that the first Rydberg channel operates on a different set of qubits at a particular time than the second Rydberg channel such that a first MCZ is driven by the first Rydberg channel and the second Rydberg channel, and the second MCZ is driven by the second Rydberg channel and the first Rydberg channel. In serial utilisation the Rydberg channels may in principle address any of the qubits in the quantum circuit, however for any one MCZ, they operate on different qubits. The inventors have discovered that once the retargeting time reaches a certain duration, it becomes advantageous to use two Rydberg channels to execute a MCZ (i.e., serialised operation).

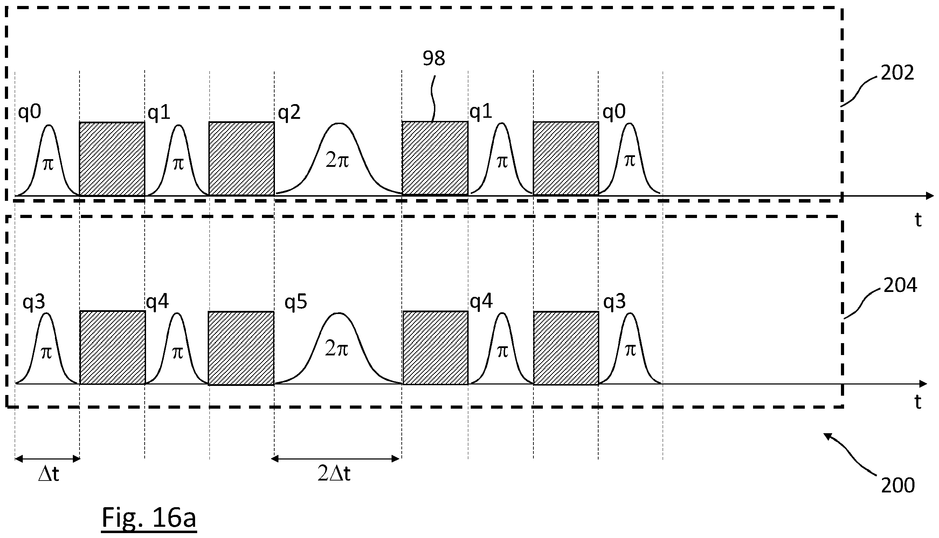

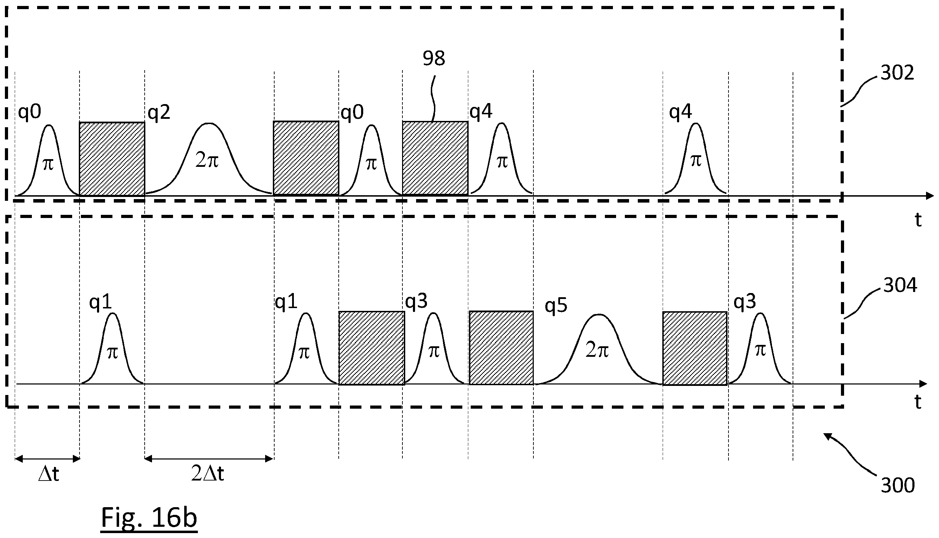

A comparison of parallel vs serial use of two Rydberg channels in now discussed in relation to figures 16a and 16b, which have similar references to figure 8 wherein like references represent like features. Figures 16a and 16b are shown with larger retargeting periods than previous examples. In this discussion we assume that the quantum circuit has two CCZ gates to execute. The first CCZ gate comes before the second CCZ gate. The first CCZ gate operates on qubits q0, q1, q2. The second CCZ gate operates on qubits q3, q4, q5. In parallelization 200 as shown in figure 16a, one Rydberg channel 202 takes care of the first CCZ, whilst the other Rydberg channel 204 takes care of the second CCZ. For serialisation 300, as shown in figure 16b both the Rydberg channels 302, 304 work together to execute one CCZ then the other CCZ in a serialised fashion.

As shown from the figures 16 and 16b above, serialization takes more time by having 12 lots of time slots $\Delta t$ rather than 10 lots of time slots $\Delta t$ for parallelisation. However, the serialized way presents several advantages. Firstly, the method may not need to consider the undesired Rydberg blockade effects between two different MCZs whereas if a parallelized approach were taken for implementing the two MCZs, strange, unexpected results could arise because of the interactions between the qubits of the two MCZs. Second, the whole process may be accelerated even if only one MCZ is in the so-called ready-to-be-executed set at a given moment.

In cases where two MCZs are in the so-called ready-to-be-executed set, the possibility of the two MCZs interfering with each other should not be underestimated. Thus, by increasing the total execution time slightly by serialising rather than parallelising (which may be around 10% more execution time than the parallelized way in a worst case), the serialized way provides an advantageous way of determining control pulse scheduling for a quantum circuit. Thus, in the case where retargeting time is comparable, similar to or the same as to the minimum duration of a $\pi$-pulse, the method may privilege the serialised way for executing MCZs.

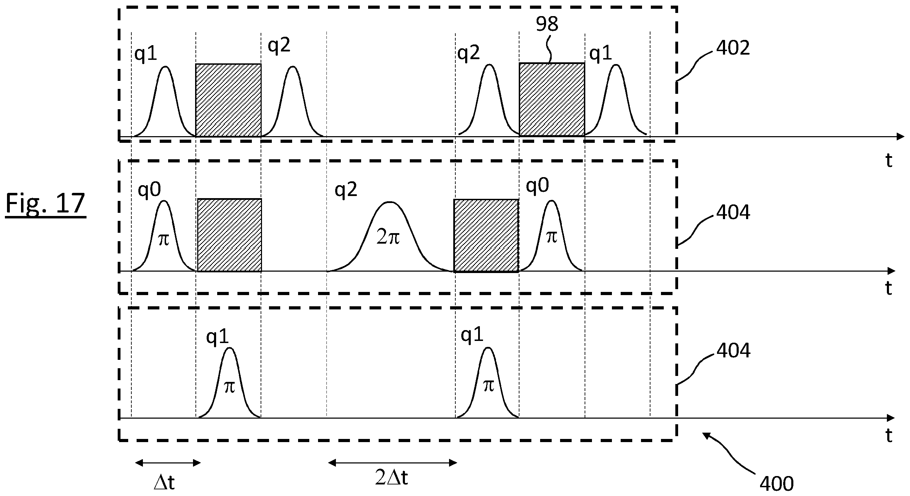

With the retargeting time taken into account, if the method uses two Rydberg channels on one single MCZ, the method may no longer execute all absorbed single-qubit gates in parallel with the MCZ as in the specific case of one Rydberg channel. Figure 17 shows an example 400 for pulses where a single CCZ gate operating on qubits q0, q1, q2 is implemented in serialised fashion with two Rydberg channels 404, 402. The figure also assumes a number of single adjacent qubit gates operating on the same qubits, with a Raman channel 402, where the single qubit gates are grouped with the CCZ according to the absorption rules for the 1 Rydberg/1 Raman case described above. As shown in figure 17, the last pulse on Raman channel 402 is executed after the CCZ has been fully executed. Therefore, the last pulse operating on q1 on the Raman channel 402 is not executed in parallel with the CCZ gate (represented by the pulses of the channels 404, 406). Similarly, the Rydberg channels have to wait for the second Raman pulse on q2 to be executed before conducting the Rydberg $2\pi$-pulse using Rydberg channel 404. In order to effectively 'absorb' single qubit gates when creating gate groups, so that they run in parallel with the Rydberg pulses, may require a different approach to the number of single qubit gates and the number of 'involved' qubits in the grouping.

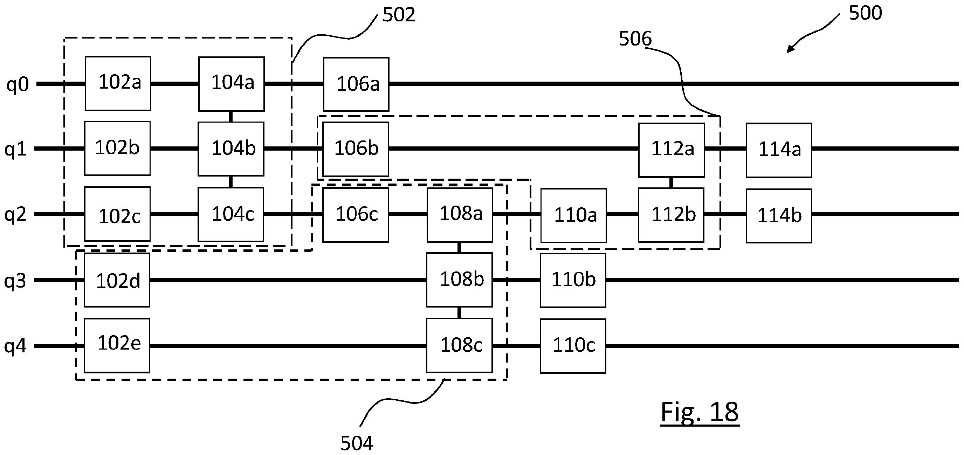

The inventors have however realised that for most quantum circuits having a real computing purpose, there are not that many single-qubit gates to perform in a quantum circuit. For every CZ gate added to the quantum circuit, there are at most 2 additional single-qubit gates. For every CCZ we add to the quantum circuit, there are at most 3 additional single-qubit gates. The same holds for a general MCZ. Instead of doing the absorption process as described for the 1 Rydberg channel case, the method may perform a different grouping process which may be referred to herein as semi-absorption. In this process, for each MCZ, the method associates the single-qubit gates of its involved qubits, that must be executed before it, with it. For a well-transpiled quantum circuit, there is at most two such single-qubit gate for each CZ, three for each CCZ, and so on. Figure 18 shows an example 500 where the semi-absorption process is implemented on the same quantum circuit as figure 10, wherein like references represent like features. The grouping process provides three gate groups 502, 504, 506 wherein each gate group contains a single MCZ plus all of the single qubit gates, of the MCZs involved qubits, that occur before the MCZ in the quantum circuit.

The extra time required to execute the Raman channel for the absorbed single qubits gates in this example is now discussed. Let's say we have to execute a CZ and its two absorbed single-qubit gates that occur before the CZ. Right before this CZ (and its gate-group) that we are dealing with, we have executed a random (other) MCZ (and its associated gate-group). During the second half (after the $2\pi$-pulse -pulse) of executing this random MCZ, the Raman channel should be idle because the semi-absorption only tackles the single-qubit gates that occur before this random MCZ. The Raman channel being idle, we can execute the two absorbed single-qubit gates during the second half of this previous MCZ and the first half of the concerned CZ.

In other words, we execute the absorbed single-qubit gates of the current gate group during the second half of the execution of the previous MCZ and the first half of the execution of the concerned MCZ.

The semi-absorption process is now further discussed in the context of creating a pulse schedule. Given a well-transpiled quantum circuit, the semi-absorption is initiated. Each MCZ absorbs all the single-qubit gates that precede it to form corresponding gate groups. The nodes of the concerned single-qubit gates are then removed from the dependency graph. After the semi-absorption, the dependency graph shows gate groups (also referred to as regrouped MCZs) and single-qubit gates to be executed before the read-out measurements of the quantum system. An ordering process, such as one that is described elsewhere herein may then be omitted.

Next is a pulse-scheduling process. Before we start, we have a graph with regrouped MCZs (regrouped with its associated single-qubit gates) and one or more single-qubit gates that occur right before the measurements. In order to make sure the functional dependencies are well respected; the method may execute the MCZs in the same order as they were examined them in the semi-absorption step. As for a non-absorbed single-qubit gate that happens right before the measurement, it may not matter when the method executes it as long as it is executed after all the MCZs that act on the concerned qubit. To keep track of this, the method may create a list of single-qubit gates that are ready to be executed. In particular, the list may be empty in the beginning if the method is implementing a quantum circuit of computing purposes because every qubit should experience at least one MCZ in such circuits.

After the initialization, the method executes the regrouped MCZs (i.e., gate groups) one by one. For example, in figure 18 gate group 502 is dealt with first, then gate group 504 then gate group 506. When the method executes a regrouped MCZ, the pulses are added to the pulse sequence one by one. The order of the qubits is determined to leave as much time as possible for the Raman channel to execute the concerned single-qubit gates. For another example, let's say the method just finished a CZ with the last Rydberg $\pi$-pulse on q0. The next MCZ also acts on q0 with an absorbed single-qubit gate of q0. If we execute the first Rydberg $\pi$-pulse on q0, we would have to put the Rydberg channels in idleness while the Raman channel executes the absorbed single-qubit gate of q0. The inventors have realised that it would be best to avoid this situation, therefore the method may rearrange the order of qubit execution for the MCZ gate (for example under the $\pi$-$2\pi$-$\pi$ mechanism) such that q0 receives a Rydberg pulse as late as possible. Therefore, the order of qubits in the previous MCZ affects how the method executes the current MCZ. In other words, the qubit order that the MCZ gate, of a first gate-group, executes its control pulses at least partially determines the qubit order that the MCZ gate, of a second gate-group, executes its control pulses; wherein the second gate group occurs after the first gate group in the quantum circuit. Preferably, the method may leave time between two Rydberg pulses on the qubit that has a single-qubit gate in-between.

Once the method has the order of qubits determined for a regrouped MCZ, the pulses (hence control signals for the EM pulses) are scheduled. During the first half of the execution of a first gate-group, the method executes a single-qubit gate, when it exists, and then one Rydberg pulse. During the second half of the execution, the method adds the Rydberg pulses directly. For example, if we want to execute a CZ on q0, q1 in this order, we add the single-qubit gate of q0 to the Raman channel, then a $\pi$-pulse aiming at q0 to the Rydberg channels. Next, we add the single-qubit gate of q1 to the Raman channel, then a $2\pi$-pulse aiming at q1 to the Rydberg channels. Finally, we add a $\pi$-pulse aiming at q0 to the Rydberg channels.

The method may schedule these pulses at the respective earliest time of each channel. The method may automatically detect conflicts such as overlapping pulses on the same qubit and may solve the conflict by introducing a delay for the channel with the latter pulse.

In summary, the method may apply the follow algorithm or process:

1. Semi-absorption

To associate the single-qubit gates that should be executed before the MCZ with the MCZ.

These absorbed single-qubit gates can be executed during the first half (before the $2\pi$-pulse) of the current MCZ and the second half (after the $2\pi$-pulse) of the previous MCZ.

2. Pulse-scheduling

(a) For a regrouped MCZ, the method determines the order of qubits, depending on how the previous MCZ is executed. The philosophy is to leave as much time as possible to the Raman channel when it needs to perform a Raman pulse between two Rydberg pulses on the same qubit.

(b) Once the order is determined, the method adds the pulses one by one to the execution list without needing further optimization, although further optimisation may be chosen.

Specific examples are described above including types of gates and number of qubits involved, however it is to be understood that the same principles apply to other examples with different gates and qubits. Any one or more features of the above semi-absorption process and scheduling may be applied to any of the examples herein including, but not limited to, the rules for grouping the gate groups and the considerations for when single qubit gates of a gate group may be executed. For example, the above semi-absorption process may be used for a system using three or more Rydberg channels.

For the ordering and execution of such an example, things may become more complicated since possible Rydberg blockade interference could hinder the well-functioning of different MCZs that are functionally independent and executed at the same time. The method may cope with such unexpected results and fully exploit the potentials of multiple Rydberg channels by adopting the ready-to-be-executed set described above in the example of using one Rydberg channel. The method may identify those gates, hence control signals, with the highest priority and could be executed without the interference of its neighbour qubit/s.

Further examples with multiple channels for single qubits

The processes described in the following examples may be used with other examples described herein. Any of the features described, for example certain processes and rules, may be isolated from the example and used in other examples and/or with other features from the processes and rules described underneath. In the following discussion we assume multiple hyperfine channels are used and that these are Raman channels, however other single qubit gate channels EM source systems may be used.

Raman channels typically don't interfere with each other as long as they act on different qubits at every moment. The method may therefore keep a table of "earliest available time" for the Raman channels and a table of "earliest available time" for the qubits. For the channels, it's the finishing time of the last pulse on the channel at the moment.

For the qubits, it's the finishing time of the last pulse (including Rydberg ones) on the given qubit that may matter. As an example, if the method were to intend to execute a single-qubit gate on qubit q0, the method may create a table of "earliest available time" for q0 for the Raman channels. Here, the method may take into account the retargeting time when the current target of a Raman channel isn't q0. Then the method may retrieve the earliest available time for q0 from the table for the qubits (noted as t0).

Now the method may choose the channel to execute the single-qubit gate on q0. Comparing t0 with the table of "earliest available time for q0" for the Raman channels. In an ideal circumstance there may be one exact value in the table that matches t0. If there is not, the method may want to minimize the delay, therefore the method may choose the channel that is available before t0. Meanwhile, it is desirable not to waste unnecessary idle time, so the method may choose the one that is closest to t0. If there isn't any channel available before t0, the method may take the channel that is available the earliest.

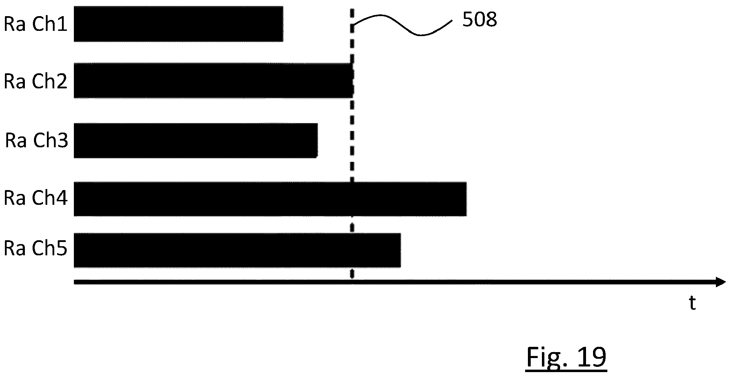

Figure 19 shows an example of this principle with five Raman channels (Ra Ch1, Ra Ch2, Ra Ch3, Ra Ch4, Ra Ch5). The right side-end of each rectangular box represents the "earliest available time for q0". The method can determine the order of priority accordingly. In the example in figure 19 it would be Ch2 > Ch3 > Ch1 > Ch5 > Ch4, with the dashed line 508 showing the chosen earliest available time 't' for q0. Once the method has chosen the Raman channel, the method may then introduce the retargeting process when applicable and then add the pulse. The method may update the tables accordingly.

Specific examples are described above including types of EM sources and number of qubits involved, however it is to be understood that the same principles apply to other examples with different sources and qubits.

Examples of prioritising the execution of multi-qubit gates

In certain circumstances there may be an undesired blockade interference. The method may be configured to consider the following in any of the examples presented herein. As with other examples the example underneath is discussed with respect to pulse sequences, gate types, and EM sources similar to other examples, but such sequences, gate types and sources are meant only for example purposes.

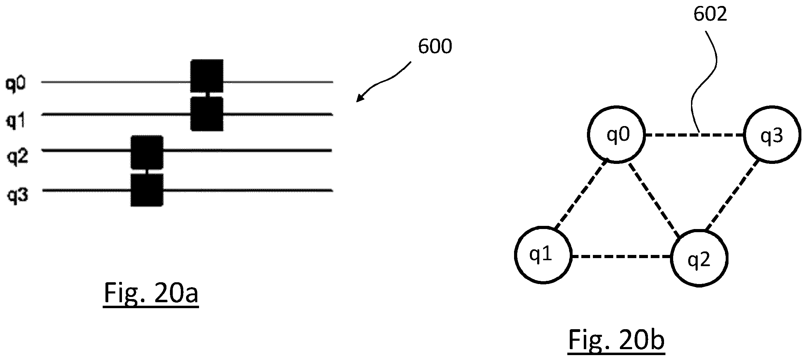

In one example four Rydberg channels are for executing the quantum circuit 600 shown in figure 20a wherein qubits q0 and q1 are operated on by a CZ gate after qubits q2 and q3 are operated on by a difference CZ gate. Figure 20b shows the physical spatial layout of the qubits where dashed lines 602 show qubits that may affect each other with Rydberg interference. It may be tempting to do the two CZs at the same time with two pairs of Rydberg channels. However, when q0 is in the Rydberg state, there may be issues executing the CZ on q2 and q3 because of unwanted Rydberg interference. The method may therefore introduce a table or list of "earliest Rydberg-interference-free time" for qubits. In one example, when executing an MCZ, the method may schedule the control pulses such that all concerned qubits are Rydberg-interference-free.

Carrying on this example in figures 20 and 20b, when executing an MCZ, let's say a CZ on q0 and q1, if q0 is receiving a $2\pi$-pulse at t0, and the pulse finishes at t1, the method may update the values for q0's neighbour qubits in the table to t1. In this case, q1 is receiving one $\pi$-pulse before and one after q0's $2\pi$-pulse. The time that matters is the one when q1 is finished with the second $\pi$-pulse. This is noted as t2. The method may update the values of q1's neighbour qubits in the table to t2. With the table well updated each time the method executes a MCZ, the method may determine which MCZs are really ready to be executed, both in terms of functional dependencies and technical dependencies related to Rydberg blockades.

The method may therefore identify the MCZ with the highest priority among a set of MCZs that could be executed in terms of functional dependencies. The method may go through the dependency graph while executing. The MCZs without preceding gates may be identified as 'ready to be executed'. As for the priority, the method may use a Critical Path Method approach. For each MCZ, the method may calculate how far it is from the finishing line, i.e., the end of the control signals for the whole circuit. As an example, suppose that each $\pi$-pulse takes one unit time, and each $2\pi$-pulse takes two unit times. For example, a CZ just before the measurement at the end would receive a score of 4 by having the following sequence of pulses $\pi$- $2\pi$- $\pi$ driven by appropriate control signals. Correspondingly, a CCZ at the end would receive a score of 6 by having the following sequence of pulses $\pi$-$\pi$-$2\pi$-$\pi$-$\pi$. For a MCZ not at the end, its score would be the highest score of its successors plus its length.

With these scores, the method may provide a heuristic way to identify which MCZ to execute first. The method may choose the MCZ that has the highest score. The score gives an idea of the minimum duration necessary between the end of the whole quantum circuit and the beginning of this current MCZ. Another advantage of keeping these scores is that once these scores are calculated, there may be no need to update them. Since the method may calculate the distance to the finishing line, it would not change in the course of the algorithm.

The method may also optionally determine how to choose between different Rydberg channels and/or whether to choose between using one or a plurality of Rydberg channels, how many Rydberg channels and which ones.

The method may keep track of the earliest available time for each Rydberg channel (i.e., when each Rydberg channel is ready to be used again). This may be determined from the finishing time of the last pulse on the channel.

The method may first find the Rydberg channel of the earliest "earliest available time". Then the method may check if there exists a Rydberg channel whose earliest available time lies in the margin of the minimum duration of a $\pi$-pulse. If there is, the method may select that said existing Rydberg channel and use it as the second channel. If there is not such an existing channel then the method may only use one channel for the next MCZ.

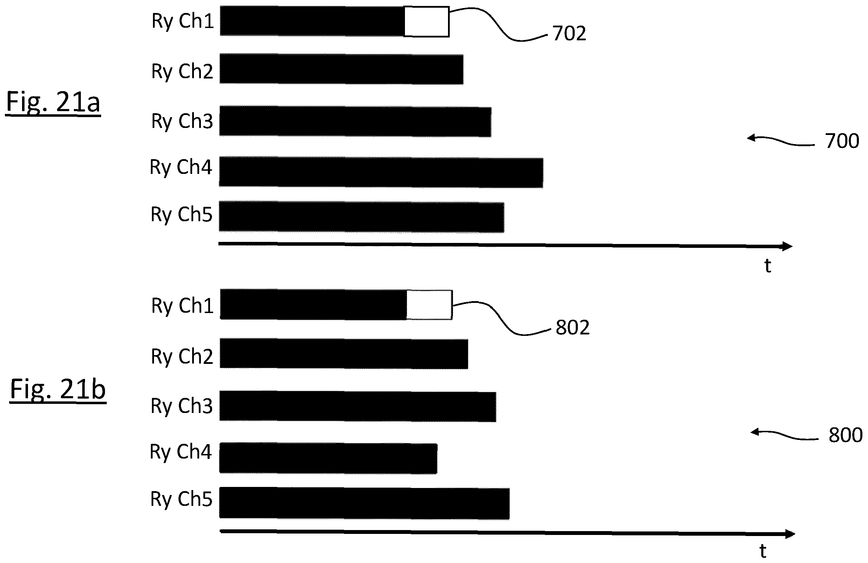

Figure 21a shows a first example 700 of this principle with five Rydberg channels Ry Ch1-5. In this example above, Ch1 is the earliest being available. The method checks in the margin of the block 702, which represents the minimum duration of a $\pi$-pulse, if there's any other channel that would be available. In this example there is not, therefore, for the next MCZ, the method uses only Ch1 to execute it.

Figure 21a shows a second example 800 of this principle with five Rydberg channels Ry Ch1-5. In the example above, Ch1 is the earliest being available. The method checks in the margin of the block 802, which represents the minimum duration of a $\pi$-pulse, if there's any other channel that would be available. In this example Ch4 is in the margin, so for the next MCZ, the method uses Ch1 and Ch4 to execute it.

Further example using multiple channels for executing multi-qubit gates

This example may use features from other examples above and may be combined with other examples above. In previous examples, the method may determine the one or more Rydberg channels to use to execute a particular MCZ. The method may further determine which qubits are selected for which control signal. In this example the method determines the order of the qubits under the $\pi$-$2\pi$-$\pi$ mechanism described elsewhere herein, however other EM pulse schemes may be used. Once the method has determined which qubits correspond to which control signal, the method may then schedule the EM pulses, hence schedule the control signals and determine any retargeting.

In one example, the method is to execute a CZ on q0, q1 with two Rydberg channels wherein there also exists a further single qubit gate on q0 and q1 according to the grouping from the semi-absorption process. Suppose that the order of qubits is in q0, q1. First, the method may schedule the single-qubit gate of q0 to the Raman channels, then a $\pi$-pulse aiming at q0 to the first Rydberg channel. Next, the method may add the single-qubit gate of q1 to the Raman channels, then a $2\pi$-pulse aiming at q1 to the second Rydberg channel. Finally, the method may then add a $\pi$-pulse aiming at q0 to the first Rydberg channel without retargeting. The method may schedule these pulses at the corresponding channels, determined with the help of the various "earliest available time" tables mentioned in previous examples. The method may also automatically detect conflicts such as overlapping pulses on the same qubit and solve them by introducing a delay for the latter channel.

In doing this the method may use the 'ready-to-be-executed' set to keep track of the regrouped MCZs (i.e., gate groups) that could be executed without violating functional dependencies. The method may also use another set to keep track of the single-qubit gates that occur right before the quantum system measurements.

At each iteration, the method may determine: A) which Rydberg channels should be used; B) which regrouped MCZ to execute first.

For addressing A), the method may follow the rules and processes described above for choosing between multiple Rydberg channels. Once the Rydberg channels are chosen, the method may calculate when to start the next MCZ by taking into account the retargeting time. Optionally, it may be assumed, possibly as a default, that retargeting may be needed for each channel. With the starting time, the method may access the ready-to-be-executed set and eliminate the regrouped MCZs whose qubits still can't be Rydberg-interference-free before the starting time. From this the method may present a temporary "enhanced" ready-to-be-executed set. For addressing B), i.e., to choose the regrouped MCZ to execute, the method may adopt the priorities established above describing a heuristic way to identify which MCZ to execute first. If there is nothing in the enhanced set, the method may perform a "force-execute" by choosing the regrouped MCZ (i.e., gate group) whose qubits can be Rydberg-interference-free the earliest possible.

Once the method has chosen the Rydberg channels and the regrouped MCZ, the method may schedule the pulses accordingly. However, the method may further determine the order of qubits under the $\pi$-$2\pi$-$\pi$ mechanism. In doing this the method may use concepts from previous examples herein, for example, in the specific case of two Rydberg channels. The method may refer to the table of "earliest available time" for qubits. Preferably the method may want to address the qubits that have single-qubit gates in the regrouped MCZ as late as possible. The method may apply two approaches to this, first, for a qubit that has a single-qubit gate to be executed before the MCZ, it should have enough time between its last pulse and its first Rydberg pulse. Second, when there is an inevitable delay, the method may schedule it so that it has the least impact on the whole regrouped MCZ.

Finally, for the single-qubit gates right before the measurements, the method may add to the Raman channels whenever there's an available slot. Depending on how the whole algorithm is implemented, there are different ways to schedule these single-qubit gates.

The above examples present different considerations for scheduling control signals for controlling EM pulses for driving a Neutral atom quantum computer. It is understood that these examples should not be treated in isolation from the rest of the examples herein and that further examples may be derived by combining features from different examples. These features may include, but are not limited to: how many multi-qubit channels to use; how many single qubit channels to use; how to group a plurality of quantum gates into gate groups; how to determine which multi-qubit gate to execute first; how to determine which single qubit gate to execute first; the order of qubits to be addressed in a multi-qubit quantum gate; when to execute single qubit gates that are either in a gate group or not in a gate group.

Examples of features of a classical computer/computing system for use with the method

Some portions of the above description present the features of the method/system in terms of algorithms and symbolic representations of operations on information performed by a classical computer. These algorithmic descriptions and representations are the means used by those skilled in the data processing arts to most effectively convey the substance of their work to others skilled in the art. These operations, while described functionally or logically, are understood to be implemented by computer programs. Furthermore, the reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and not mental steps performed by a human. Similarly, all of the types of data described and claimed may be stored in a computer readable storage medium operated by a computer system and are not simply disembodied abstract ideas.

The method/system also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g., flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

## Claims

1. A method for scheduling control signals for driving a plurality of electromagnetic sources for controlling, using a plurality of quantum gates associated with a gate sequence, a plurality of atoms of a neutral atom quantum computer; wherein:

   each of the plurality of atoms is associated with a corresponding different qubit of a plurality of qubits such that at least:

   a first atom of the plurality of atoms corresponds to a first qubit of the neutral atom quantum computer;
   a second atom of the plurality of atoms corresponds to a second qubit of the neutral atom quantum computer;

   the plurality of electromagnetic sources comprises at least a first electromagnetic source and a set of at least one further electromagnetic sources wherein:

   the first electromagnetic source is operable on at least one of the first and second qubits;
   the set of at least one further electromagnetic sources is operable on at least the first and second qubits;

   the method comprising:

   I) generating a set of one or more first control signals for a first quantum gate wherein: at least one of the first control signals is for outputting an electromagnetic signal from the first electromagnetic source;
   the first quantum gate is associated with operating on at least one of the first qubit or second qubit; the first gate operating for a first duration;

II) generating a set of three or more second control signals for a second quantum gate wherein:

at least one of the second control signals is for outputting an electromagnetic signal from the set of at least one further electromagnetic sources;
the second quantum gate is associated with operating on at least the first qubit and second qubit; the second quantum gate operating for a second duration;

III) scheduling the control signals such that at least one electromagnetic signal associated with one of the first or second quantum gates is output before the end of the respective duration of the other of the first or second quantum gates.

2. The method as claimed in claim 1 where:

the second quantum gate is a Controlled-Z, CZ, or a Multiple-Controlled-Z, MCZ, gate, acting on a first set of N qubits of the plurality of qubits wherein N numbers two or more qubits;
the method comprising:

selecting, from analysing the gate sequence, one or more single-qubit quantum gates collectively operating on a second set of M qubits associated with the second quantum gate; the said one or more single qubit quantum gates being immediately before and/or after the second quantum gate in the gate sequence; the set of M qubits comprising qubits from the first set and numbering, at most, N-1;
scheduling the control signals to execute the selected single-qubit quantum gates at least partially during the duration of the second quantum gate.

3. The method as claimed in claim 2 further comprising:

identifying the atom associated with a qubit of the N qubits that is not selected in claim 2;
selecting the above identified atom to receive the starting control signal for the second quantum gate.

4. The method as claimed in claims 2 or 3, further comprising:

identifying the atom associated with a qubit of the N qubits that is not selected in claim 2;
selecting the above identified atom to receive the final control signal for the second quantum gate.

5. The method as claimed in any of claims 2-4 further comprising:

A) identifying a single-qubit quantum gate that:

i) operates on a qubit of the N qubits that is not one of the M qubits; the said qubit of the identified single-qubit quantum gate being the identified qubit;
ii) resides between the second quantum gate and a third quantum gate wherein the third quantum gate:

a. occurs later in the gate sequence than the second quantum gate;
b. operates on two or more of the plurality of qubits of the neutral atom quantum computer wherein one of the said two or more qubits is the identified qubit;

iii) resides adjacent to the second quantum gate and third quantum gate in the gate sequence;

B) scheduling the control signals to execute the identified single qubit quantum gate in step A) at least partially during the duration of the third quantum gate.

6. The method as claimed in claim 1 wherein:

I) the plurality of quantum gates comprises:

i) a plurality of multi-qubit quantum gates; and,
ii) a plurality of single-qubit quantum gates;

II) the step of scheduling the control signals comprises:

    A) grouping the quantum gates by:

        iii) creating a first gate-group comprising at least:

            a) a first of the multi-qubit quantum gates; and,
            b) a first of the single-qubit quantum gates,

        iv) creating a second gate-group comprising at least:

            c) a second of the multi -qubit quantum gates; and,
            d) a second of the single-qubit quantum gates,

    B) determining an order of gate execution by prioritising the first gate group over the second gate group.

**7.** The method as claimed in claims 1 or 6 wherein the set of at least one further electromagnetic_sources comprises:

    I) a second electromagnetic source; and,
    II) a third electromagnetic source;

each of the second and third electromagnetic sources for outputting the second control signals for driving the second quantum gate.

**8.** The method as claimed in claim 7 as dependent upon claim 6 wherein:

    I) the first quantum gate is the first single qubit quantum gate;
    II) the second quantum gate is the first multi-qubit quantum gate;
    III) creating the first gate group comprises:

        selecting one or more single-qubit quantum gates, associated with the qubits operated on by the first multi-qubit quantum gate, that occur before the first multi-qubit quantum gate in the gate sequence;
        not selecting single-qubit quantum gates, associated with the qubits operated on by the first multi-qubit quantum gate, that occur after the first multi-qubit quantum gate in the gate sequence;

    IV) creating the second gate group comprises:

        selecting one or more single-qubit quantum gates, associated with the qubits operated on by the second multi-qubit quantum gate, that occur before the second multi-qubit quantum gate in the gate sequence;
        not selecting single-qubit quantum gates, associated with the qubits operated on by the second multi-qubit quantum gate, that occur after the second multi-qubit quantum gate in the gate sequence.

**9.** The method as claimed in claim 8 wherein:
the one or more control signals associated with the single-qubit quantum gates of the second gate group are executed:

    A) before or at least partially during the execution of the last control signal associated with the first multi-qubit quantum gate;
    B) after or at least partially during the execution of the first control signal associated with the second multi-qubit quantum gate.

**10.** The method as claimed in claim 9 wherein:

    I) the control signals associated with the first multi-qubit quantum gate comprise a middle control signal in the control signal order for the first multi-qubit quantum gate;
    II) the control signals associated with the second multi-qubit quantum gate comprise a middle control signal in the respective control signal order for the second multi-qubit quantum gate;
    III) the control signals associated with the single qubit quantum gates of the second gate group are executed:

i) after the middle control signal for the first multi-qubit quantum gate;
ii) before the middle control signal for the second multi-qubit quantum gate.

11. The method of claim 1 wherein the first quantum gate precedes the second quantum gate in the gate sequence.

12. The method of claim 11 further comprising scheduling the control signals such that the electromagnetic signal associated with the starting qubit operation of the second quantum gate is output before the end of the first gate duration.

13. The method as claimed in claim 12, further comprising:

   analysing the gate sequence to determine any time periods when the starting qubit for the second gate is being operated on by the first gate; and,
   scheduling the control signal for operating on the starting qubit based on the determination.

14. The method of claim 1 wherein:

   the plurality of atoms comprises a third atom corresponding to a third qubit of the neutral atom quantum computer;
   the plurality of gates comprises a third quantum gate operable in parallel with at least one of the first or second gates, in the gate sequence; the third quantum gate operating on the third qubit for a third gate duration;
   the method comprising:
   scheduling the control signals such that said electromagnetic signal associated with the second quantum gate is output before the end of the third gate duration.

15. The method of any preceding claim further comprises outputting the control signals to the plurality of electromagnetic sources.

Fig. 1

EP 4 250 187 A1

Fig. 2a

Fig. 2b

Fig. 3a          Fig. 3b          Fig. 3c

E

R ———————————————— |r>

π

g ——●—————————●———— |0>

h ——————————————————— |1>

C          T

<u>Fig. 4a</u>

E

R ——●————————————— |r>

π

g ——————————●———— |0>

h ——————————————————— |1>

C          T

<u>Fig. 4b</u>

EP 4 250 187 A1

C ——————————————— CZ ——————————————

T ———— H ————— CZ ————— H ————

70

72          74

<u>Fig. 5</u>

Fig. 6a

Fig. 6b

Fig. 6c

Fig. 6d

Fig. 7

Fig. 8

Fig. 9

Fig. 10

EP 4 250 187 A1

EP 4 250 187 A1

Fig. 11

Fig. 12

Fig. 13

Fig. 14

1

**S2** generating a set of one or more first control signals for a first quantum gate

**S4** generating a set of three or more second control signals for a second quantum gate

**S6** scheduling the control signals such that at least one electromagnetic signal associated with one of the first or second quantum gates is output before the end of the respective duration of the other of the first or second quantum gates

## Fig. 15

Fig. 16a

Fig. 16b

Fig. 17

EP 4 250 187 A1

Fig. 18

Fig. 19

Fig. 20a

EP 4 250 187 A1

Fig. 20b

700

702

t

Ry Ch1
Ry Ch2
Ry Ch3
Ry Ch4
Ry Ch5

Fig. 21a

800

802

t

Ry Ch1
Ry Ch2
Ry Ch3
Ry Ch4
Ry Ch5

Fig. 21b

Europäisches
Patentamt

European
Patent Office

Office européen
des brevets

# EUROPEAN SEARCH REPORT

**Application Number**

EP 22 30 5330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Silvério Henrique ET AL: "Pulser: An open-source package for the design of pulse sequences in programmable neutral-atom arrays", Quantum, 12 January 2022 (2022-01-12), page 629, XP055958292, Ithaca DOI: 10.22331/q-2022-01-24-629 Retrieved from the Internet: URL:https://arxiv.org/pdf/2104.15044.pdf [retrieved on 2022-09-06] * abstract * * Chapters 1-5; page 1 - page 16; figures 1-13 * ----- | 1-15 | INV. G06N10/40 G06N10/20 |
| X | US 2021/272005 A1 (KING JONATHAN [US] ET AL) 2 September 2021 (2021-09-02) * abstract * * paragraph [0003] - paragraph [0008]; figure 15A * * paragraph [0056] - paragraph [0070]; figures 2-4 * * paragraph [0100] - paragraph [0109]; figures 1-3B * * paragraph [0141] - paragraph [0153]; figure 4 * * paragraph [0216] - paragraph [0220]; figures 15A-15C * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 8 September 2022 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5330

This annex lists the patent family members relating to the patent documents cited in  the above-mentioned European search report.
The members are as contained in the European Patent Office EDP file on
The European Patent Office is in no way liable for these particulars which are merely given for the purpose of information.

08-09-2022

| Patent document cited in search report | Publication date | Patent family member(s) | Publication date |
|---|---|---|---|
| US 2021272005 A1 | 02-09-2021 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAROLD J METCALF ; PETER VAN DER STRATEN.** Laser cooling and trapping of atoms. *JOSA B,* 2003, vol. 20 (5), 887-908

- **FLORENCE NOGRETTE ; HENNING LABUHN ; SYLVAIN DE LESELEUC ; THIERRY LAHAYE ; ANTOINE BROWAEYS.** Synthetic three-dimensional atomic structures assembled atom by atom. *Nature,* September 2018, vol. 561 (7721), 79-82